# EUROPEAN PATENT SPECIFICATION

(11) **EP 2 225 925 B1**
(45) Date of publication and mention of the grant of the patent: **20.11.2013**
(21) Application number: 10397503.3
(22) Date of filing: 02.03.2010
(51) Int. Cl.: A01B 59/00, A01B 59/06, A01B 59/043, A01B 71/06

(54) **A three-point hitch device arrangement**
Dreipunkt-Kupplungsvorrichtung
Dispositif de crochet en trois points

(30) Priority: 02.03.2009 FI 20095204
(43) Date of publication of application: 08.09.2010
(73) Proprietor: LH Lift Oy, 41370 Kuusa (FI)
(72) Inventor: Riipinen, Tapio, 41340, LAUKAA (FI); Järvinen, Timo, 41800, KORPILAHTI (FI); Väätäinen, Heikki, 00640, HELSINKI (FI); Pajarinen, Mikko, 40700, JYVÄSKYLÄ (FI); Lauren, Pentti, 41340, LAUKAA (FI); Kumpulainen, Jukka, 41340, LAUKAA (FI)
(74) Representative: Helke, Kimmo Kalervo

(56) References cited:
- EP-A1- 0 774 201
- EP-A1- 1 982 855
- DE-B- 1 295 903
- DE-C1- 3 938 419
- FR-A1- 2 622 761
- GB-A- 1 128 193
- GB-A- 2 247 148
- US-A- 3 791 454
- US-A- 4 071 105
- US-A- 4 944 354
- US-B1- 6 234 508
- US-B2- 6 478 094

## Description

The invention relates to an arrangement in connection with a three-point hitch device, which includes
- an upper link arm, in which there is a coupling element for coupling the upper link arm to a coupling counterpiece fitted to a work machine,
- alignment means for aligning the coupling element of the upper link arm relative to the counterpiece fitted to the work machine, and
- lower link arms together with operating devices and in which the alignment means are arranged to operate independently of the operating devices of the lower link arms. In addition, the invention also relates to an upper link arm.

A tractor three-point hitch device is known from the prior art, in which there are, for example two lower link arms below and an upper link arm above. Instead of, or as well as lower link arms, it is possible to refer to traction arms. Typically, a work machine is coupled to the hitch device in such a way that first the lower link arms are coupled to the work machine. Numerous solutions for locking the lower link arms and unlocking them are known from the prior art. For example, using a cable to manually operate a locking catch from the cab is known, as is using an operating device to operate a locking catch (e.g., US patent 6,478,094 B2).

Typically, it is relatively unproblematic to fit and lock the lower link arms to the coupling counterpiece of a work machine. However, the locking coupling of even a quick-release locking upper link arm to the coupling counterpiece of a work machine is considerably more problematic. In conventional solutions, this can require the work of even two people. While the driver controls the tractor and three-point hitch device from the cab, a second person guides the upper link arm between the work machine and the tractor and couples it to the coupling counterpiece of the work machine. One prior art relating to upper link arm has been presented in the DE patent publication 1 295 903.

An attempt can also be made to couple the upper link arm to the work machine by only the action of the tractor driver, but this form of operation is labourious and even dangerous for the driver. Particularly in the case of a front-lift device, the driver must leave the tractor's cab now and then to orientate and align the upper link arm better with the coupling counterpiece and then return to the cab, for example, to move the tractor or coupling device into a better position relative to the work machine, or in order to couple the work machine. Various kinds of static light-construction arms are also known, which allow the upper link arm to be supported in a fixed position. Often especially the rear of a tractor has a very cramped construction, which for its part makes it difficult to couple a work machine that may have to be attached very close to the rear of the tractor.

In cab-less or open-cab tractors, the driver can try to guide the upper link arm of the rear-lift device to the coupling counterpiece of the work machine, even from the cab seat. In that case however, the driver will have to reach behind the seat to support and guide the upper link arm manually, when simultaneously controlling the tractor and especially reaching the pedals located at floor level will be extremely difficult. In addition, the coupling operations performed between the work machine and the tractor and the reaching for the upper link arm from the cab create a considerable safety risk, for example if the work machine moves or the driver slips.

Some solutions aiding the coupling of the upper link arm of a rear-lift device are known from the prior art. US patent 4,071,105 discloses one such example. The solution in question is not, however, applicable to tractors with cabs. In addition, the orientation of the coupling elements of the upper link arm towards the coupling counterpiece of a work machine is known from US patent 4,944,354. The solution is based on spring elements fitted between the upper link arm and the lifting device. If the direction movement of the upper link arm is linked to the movement of the lifting device, this may even in certain situations interfere with the coupling of the upper link arm.

One solution for locking the attachment element of the upper link arm to the coupling counterpiece of a work machine is known form US patent 6,478,094 B2. This is quite complex in its construction, and additionally does not solve the alignment of the coupling element with the coupling counterpiece of the work machine. In addition, all of the above solutions are typified by the alignment of the coupling element of the upper link arm, and especially its locking to the coupling counterpiece of the work machine, taking place mainly simultaneously in essentially two dimensions. It is difficult to envisage the alignment situation from the cab of the tractor, from which there is limited visibility to the coupling point, particularly in the case of a front-lift device.

The present invention is intended to create an arrangement in connection with a three-point hitch, the operating principle and construction of which are simple and by means of which it is simpler than previously to couple to a work machine. The characteristic features of the arrangement according to the invention are stated in Claim 1, and of the upper link arm in Claim 7.

According to the invention, the alignment means for aligning the upper link arm's coupling element relative to the coupling counterpiece of the work machine are arranged to operate independently of the other operating devices. In other words, aligning the coupling element of the upper link arm of the three-point hitch device relative to the coupling counterpiece of the work machine takes place mainly independently. The invention permits at least the motorization, and even the partial automation of the alignment of the upper link arm, without complex mechanisms, thus providing added value in the alignment and also in the acceleration and facilitation of the coupling to the work machine.

In addition to the alignment of the upper link arm, its attachment to the work machine can also be facilitated by means of locking the upper link arm to the work machine. According to one first embodiment, the coupling element of the upper link arm can be locked to the coupling counterpiece of the work machine, by means of an axial movement of the upper link arm through a special adapter part. According to a second embodiment, the coupling element of the upper link arm can be brought to the coupling counterpiece of the work machine by means of a small vertical movement of the upper link arm through the special adapter part. For coupling, the aforementioned special adapter part, which is arranged to couple rigidly to the coupling element of the upper link arm, can be fitted to the coupling counterpiece of the work machine.

Through the invention, the upper link arm can also be locked, without complex mechanisms. Particularly the axial movement of the upper link arm also facilitates the alignment of the coupling element with the coupling counterpiece, as the movement takes place in only one dimension and there is, for example, no significant vertical rotation of the upper link arm associated with it. The invention also permits the coupling event to be motorized to various degrees and partly automated, thus providing added value by accelerating and facilitating the coupling event.

According to one embodiment, possible connection counterpieces between the tractor and the work machine for operating-device and control connections can be fitted in connection with the upper link arm and the adapter part. More particularly, the connection counterpieces on the upper link arm can be rigidly in connection with the coupling element of the upper link arm. Thus, their connection can also take place by means, for example, of an axial movement. This achieves the significant advantage that, in principle, the tractor driver need no longer have to leave the cab at all to couple a work machine. In addition, the connection counterpieces and above all the hose and lead feed-throughs associated with the connection counterpieces are gathered to run in a controlled manner from one point, so that they no longer hang loosely between the tractor and the work machine and thus cannot be damaged.

By means of the alignment means operating independently of the other operating devices, a simple construction can be used to align the coupling element at the end of the upper link arm two-dimensionally. According to one embodiment, the alignment means can include first operating-device means connected to the upper link arm, in order to move it at least vertically and second operating-device means connected to the upper link arm, in order to move it at least horizontally. Both the coupling and decoupling of the pushing-arm coupling element to and from the adapter part, and the connection and disconnection of the connection counterpieces to and from each other can be operated by operating devices.

According to one embodiment, also the coupling of the power take-off shaft to the work machine and correspondingly also its decoupling from the work machine can be linked to the thrust-arm coupling event and correspondingly also to its decoupling. This will further automate the coupling of a work machine to the tractor. For example, the grooved counterpiece of the coupling element fitted to the end of the power take-off shaft can change its shape radially. This will permit fine alignment precision when coupling the shaft to the counterpiece on the work machine. In addition, there can also be a mechanism in the power take-off shaft to straighten the universal joint and thus also the coupling head. By means of this, the grooved counterpiece in the coupling head can be suitably positioned relative to the grooved counterpiece in the work machine, permitting coupling to be performed. According to one embodiment, the locking and/or straightening mechanism of the power take-off shaft can form its own integrated structural package, an end piece, which can be installed on any known power take-off shaft whatever.

By means of the invention, advantages are gained in many other ways. First of all, the implementation is mechanically simple and reliable in operation. The invention eliminates the need for a separate control mechanism taken to the cab from the upper link arm, which are sensitive to damage and also otherwise under one's feet. The other characteristic features of the invention are apparent from the accompanying Claims while more advantages gained by means of the invention are referred to in the description portion.

The invention, which is in no way restricted by the embodiments presented in the following, is described in greater detail with reference to the accompanying drawings, in which
- Figure 1: shows one example application of the three- point hitch device for coupling an upper link arm to a work machine,
- Figure 2: shows one example application of the three- point hitch device for coupling an upper link arm and also a power take-off shaft to a work machine, in the initial stage of the coupling event, Figure 3 shows a top view of the three-point hitch device of Figure 2 and the work machine, Figures 4 - 8 show the sub-stages of the coupling of the work machine to the three-point hitch device according to Figure 2,
- Figure 9: shows one example of the upper link arm and the adapter part to be fitted to the work machine,
- Figures 10 - 13: show a cross-section of the sub-stages of the coupling and locking of the upper link arm and adapter part according to Figure 9 to each other,
- Figure 14: shows one example application of the power take-off shaft,
- Figures 15 and 16: show one example application of the coupling head of the power take-off shaft,
- Figure 17: show a side view in perspective of a second example application of the alignment means,
- Figure 18: shows a side view of a second embodiment of the upper link arm,
- Figure 19: shows a perspective view of the upper link arm according to Figure 18 and the counter- piece of the coupling element to be arranged in the work machine,
- Figure 20: shows the upper link arm according to Fig- ures 18 and 19 and the connection counter- pieces fitted in connection with it for the operating-device and control connections, seen from the head of the upper link arm,
- Figure 21: shows a perspective view of the adapter part to be arranged in the work machine for the upper link arm and the connector counter- pieces,
- Figure 22: shows a side view of a second embodiment of the end piece containing the connector head of the power take-off shaft and its straightening mechanism,
- Figure 23: shows an end view of the end piece according to Figure 22,
- Figure 24: shows a cross-section of the end piece ac- cording to Figure 22 in the power take-off position, and
- Figure 25: shows a cross-section of the end piece ac- cording to Figure 22 in the coupling posi- tion.

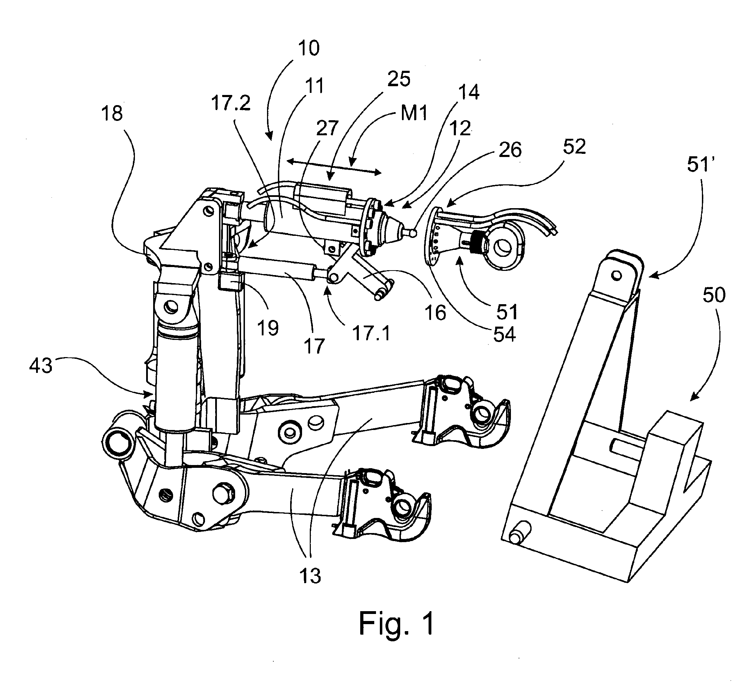

Figures 1 - 8 show one example application of the arrangement in a three-point hitch device 10 for a work machine 50, seen from different directions and in the various sub-stages of coupling. The arrangement can be utilized in, for example, industrial or agricultural tractors, or also in other similar work machines, which utilize a three-point hitch. The device 10 can form its own totality, which includes the requisite attachment arrangements for attaching it to a tractor during manufacture, or also as a retrofitted installation. Alternatively, the device 10 can also be integrated directly with the tractor's chassis. The inventive basic idea of the device 10 can be applied equally in both front and rear-lift devices.

The arrangement shown in Figure 1 can include, as basic structures, lower link arms 13, which can be coupled to a work machine 50, together with their operating devices 43, an upper link arm 11, and alignment means 16, 17, 19, for example for the upper link arm 11. The thrust arm 11 can be hydraulic, in which case it can be easily lengthened or shortened as required. It should be noted that the basic idea of the invention can also be applied equally in traditional non-hydraulic upper link arms, as will be described later.

The top link arm 11 can be attached at one end to the device 10 in the frame 18 or to the tractor in a manner that is, as such, known, for example through a ball or universal joint. At the opposite end of the upper link arm 11 is a coupling element 12. By means of it, the upper link arm 11 can be attached to a work machine 50. More particularly, the coupling element 12 of the upper link arm 11 can be detachably locked, i.e. coupled to a coupling counterpiece 51' fitted to the work machine 50. For this purpose, a special adapter part 51, through which the coupling takes place and the significance of which to the invention will be explained a little later, can be arranged in the coupling counterpiece 51' of the work machine 50.

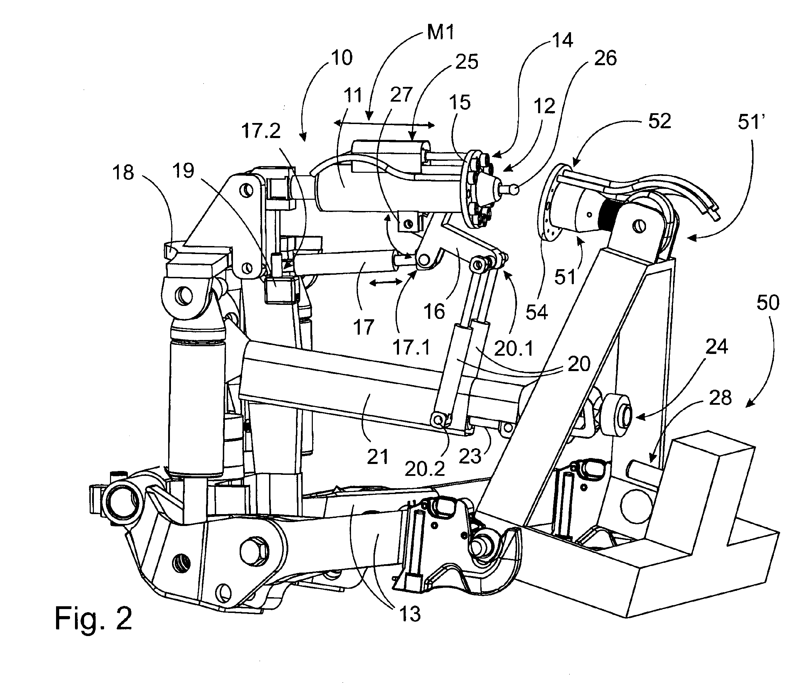

As can be seen from Figures 1 and 2, the device 10 also includes alignment means 16, 17, 19, for aligning the upper link arm 11 and thus also the coupling element 12 fitted to its end relative to the work machine 50, and even more particularly relative to the coupling counterpiece 51' fitted to the work machine 50. Using the alignment means 16, 17, 19, the coupling element 12 of the upper link arm 11 can be brought into a position relative to the work machine 50, and even more particularly relative to the adapter part 51 fitted to its coupling counterpiece 51', such that they can also be coupled together in a locked manner, which coupling is, in addition, rigid. For this purpose, the upper link arm 11 may have to be moved both horizontally and vertically.

Due to the rigid connection between the coupling element 12 and the adapter part 51, and more particularly its coupling counterpiece, the coupling element 12 can be coupled to the adapter part 51 once they are aligned relative to each other in a set manner. For its part, this permits operating devices to be used to couple the upper link arm 11 to the adapter part 51. In addition, the rigid joint between the coupling element 12 and the coupling counterpiece also permits the connector counterpieces 14, 52 arranged for the operating-device and control connections between the tractor and the work machine 50 to be integrated in connection with the upper link arm 11 and adapter part 51. These will be described in greater detail hereinafter.

The following describes the construction and operation of the arrangement with reference to Figures 2 - 8. The figures show one example application of the three-point hitch device 10 for coupling the upper link arm 11 and also the power take-off shaft 21 to the work machine 50. The figures also show one example of the sub-stages of the coupling. It will be obvious to one skilled in the art that the coupling sequence can be varied, for example according to the coupling conditions, and is in no way intended to be fixed to the coupling sequence shown here.

The alignment means 16, 17, 19 can, surprisingly, operate independently of the other operating devices 43. The term operation independent of the other operating devices 43 refers, in this case, to independent operation of the alignment means 16,17, 19, which does not depend directly or indirectly, for example, on the other operating devices 43 of the three-point hitch device 10. One example of such indirect dependence is the operation of the lower link arms 13, which are operated by their operating device 43.

By means of the independent operation of the alignment means 16, 17, 19, a significant advantage is gained in the sense that the vertical and horizontal position of the coupling element 12 of the upper link arm 11 can now be controlled very freely in two dimensions, without it being affected by, for example, the position or movement of the tractor or the other operating devices 43 or elements 13 of the three-point hitch device 10. Thus, precise and controlled alignment of the coupling element 12, independent of the other operating devices 43 and elements 13, and relative to the work machine 50 and particularly its coupling counterpiece 51', is achieved. In other words, in the case of the invention it is possible to also refer to primarily alignment of the upper link arm 11, i.e. such as takes place mainly deliberately, as it is based, for example, on operations performed by the operator of the device 10, which act directly to the upper link arm 11.

According to one embodiment, the alignment means can include first operating-device means 17 connected to the upper link arm 11, in order to move it vertically in a controlled manner. According to one embodiment, the first operating-device means can include a set of arms 16 equipped with an independent operating device 17, for moving the upper link arm 11 vertically in a controlled manner. Because the upper link arm 11 is pivoted at one end to the device 10 or the tractor chassis 18, its movement allows the alignment of the coupling element 12 at the end of the upper link arm 11 to be altered.

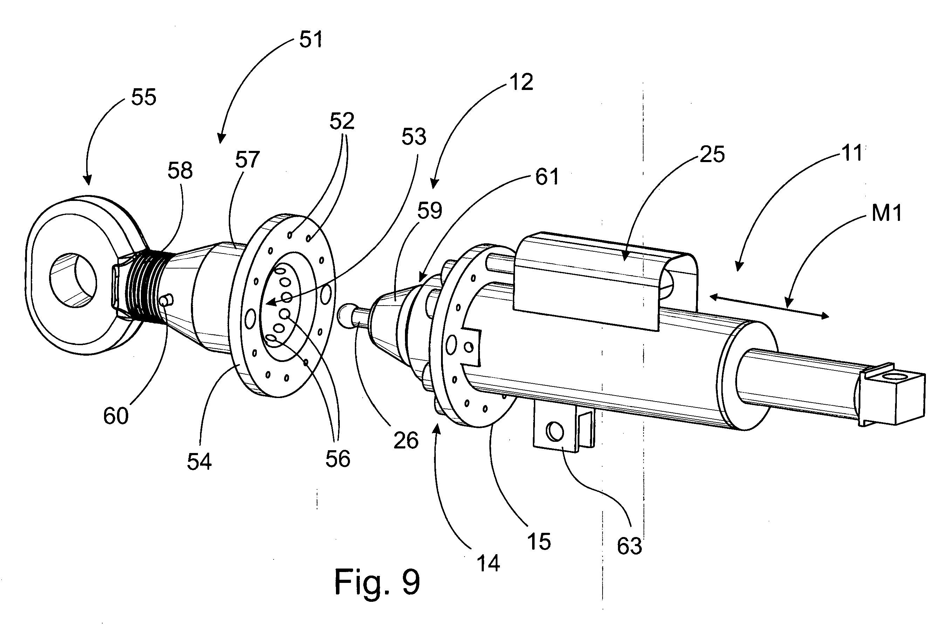

At least the first operating-device means 17 can be connected to the upper link arm 11 through an auxiliary pivot arm 16, more generally a set of arms. The set of arms 16 can be rotatably pivoted, for example, to the cylindrical part of the upper link arm 11 from underneath it, where there is an attachment lug 63 for this purpose (Figures 9 - 13 and Figure 17). Thus, the operating device 17 can be fitted indirectly to the upper link arm 11. One way to implement this indirect fitting is to make it through, for example, the auxiliary pivot arm 16 suspended from the lug 63. Of course, it is also possible to work without the auxiliary pivot arm 16.

Thus, the linear movement of the operating device 17 can be used to rotate the upper link arm 11 vertically, i.e. to raise and lower the end of the upper link arm 11 with the coupling element 12. The operating device 17 rotates the upper link arm 11 through the auxiliary pivot arm 16 fitted rotatably to the upper link arm 11 and belonging to the alignment means. The operating device can be, for example, a double-acting hydraulic cylinder 17, which can be fitted at one end 17.1 to one branch of a branched auxiliary pivot arm 16. The other end 17.2 of the hydraulic cylinder 17 can be arranged, for example, in connection with the frame 18 of the device 10.

The auxiliary pivot arm 16 provides the hydraulic cylinder 17 with an indirect attachment point, which is at a distance to the pivot point formed by the lug 63, to which the auxiliary pivot arm 16 is attached to the upper link arm 11. The indirectness of the attachment permits the upper link arm 11 to be aligned more precisely and, on the other hand, also gives the cylinder 17 sufficient length of stroke in terms of horizontal rotation, the importance of which will be explained a little later. In addition, the use of an auxiliary pivot arm 16 also achieves a particular advantage in the possible alignment of the power take-off shaft 21, as will be explained in greater detail later.

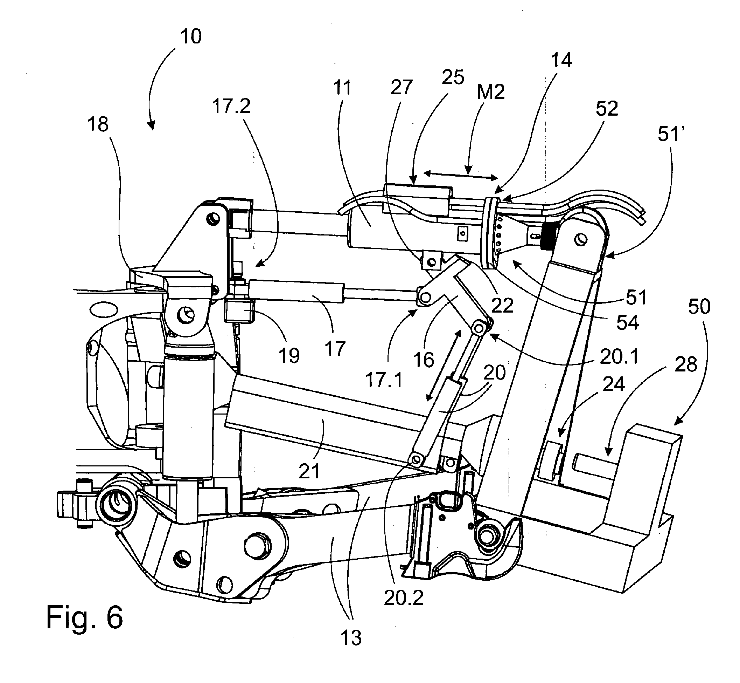

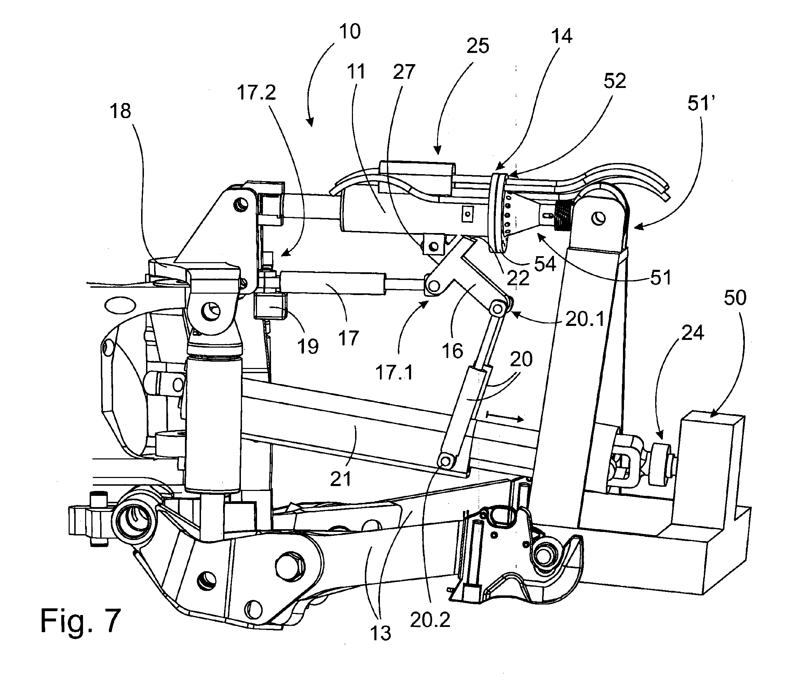

In the auxiliary pivot arm 16, there can be a branched protrusion equipped with a support surface 22 (Figures 6 and 7). The protrusion of the auxiliary pivot arm 16, corresponding to the under surface of the upper link arm 11, and its support surface 22 permit the upper link arm 11 to be aligned at a height suitable for coupling to the work machine's counterpiece 51, by means of the double-acting cylinder 17 connected to the auxiliary pivot arm 16 and affecting in an up-down direction.

In addition, a branched protrusion equipped with a support surface 22 can be used to support the relatively great mass of the upper link arm 11, especially when the upper link arm 11 is greatly extended. In addition, the continuous support of the upper link arm 11 performed by the operating device 17 under the upper link arm 11 prevents the upper link arm 11 from hanging downwards in any circumstances, when there would the danger that the hydraulic hoses that change the length of the upper link arm 11 might detach from their connections.

When coupling the work machine 50 to the three-point hitch device 10, the lower link arms 13, for example, can first be coupled to the work machine 50. The lower link arms 13 can have their own cylinders 43, more generally operating devices (Figure 1). After this, the coupling element 12 of the upper link arm 11 can be moved towards the coupling counterpiece 51' of the work machine 50 at the same time aligning it to bring the coupling element 12 and the coupling counterpiece 51' into each other's reach for coupling. According to Figure 2, by then changing the length of the cylinder 17, the vertical position of the coupling element 12 at the end of the upper link arm 11 is changed in such a way that the element 12 and the special adapter part 51 arranged in the coupling counterpiece 51' are mainly aligned with each other for coupling.

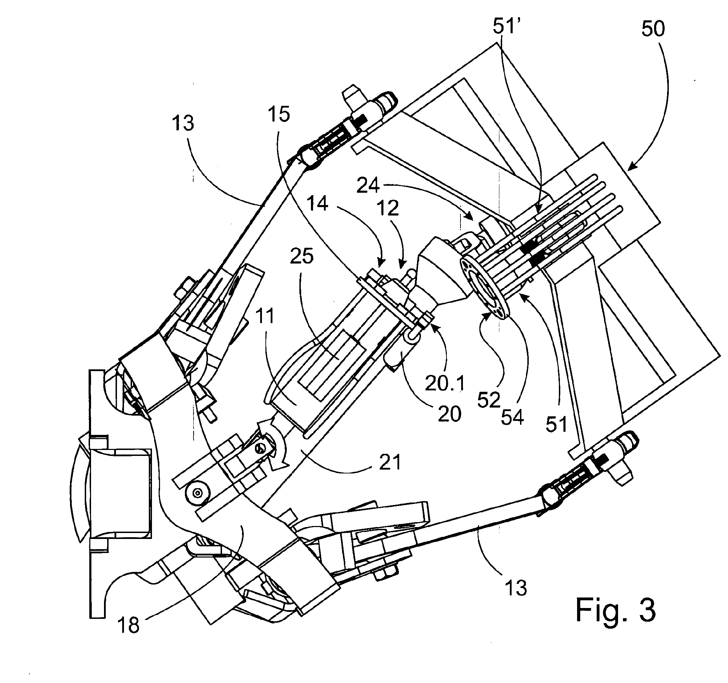

Next, the horizontal position of the coupling element 12 can be changed. As can be clearly seen in Figure 3, the upper link arm 11 may also have to rotate horizontally, to align it suitably relative to the coupling counterpiece 51' for coupling. For this purpose, the alignment means can include second operating-device means 19 connected to the upper link arm 11, for moving it horizontally in a controlled manner.

In the case of the embodiment presently being considered, there can be a turning unit 19 fitted to the device 10, for example to its frame 18, by means of which the position of the coupling element 12 in the horizontal plane is arranged to be altered. According to one embodiment, the turning unit can be a so-called rotator 19. The horizontal position of the upper link arm 11 and the coupling element 12 at its end can be changed by means of the rotator 19, for example through the operating device 17 and the auxiliary pivot arm 16. The linear movement operating device 17 can be attached at one end 17.2 to the rotator 19, which turns it horizontally. In addition, the length of stroke of the operating device 17 is arranged to be long enough for the rotation to take place over a sufficiently large sector area. Thus, the pivoting of the operating device 17 at its rotator 19 end 17.2 permits it to rotate in two dimensions. By taking care of both rotation directions using the same arm 17, the construction is made extremely simple and is thus suitable for cramped conditions, such as typically prevail between the tractor and the work machine 50.

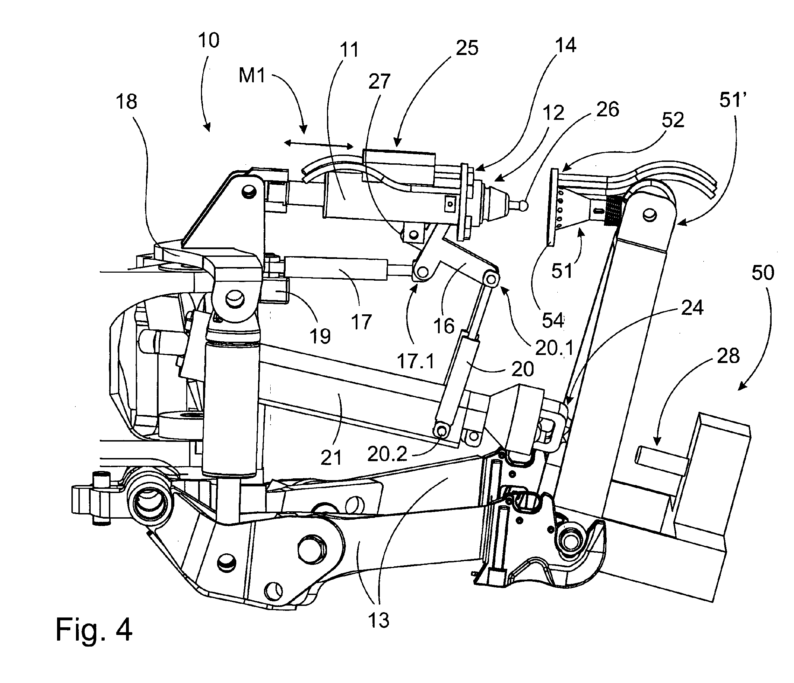

In Figure 4, the coupling element 12 has already be brought reasonably well onto the same line as the adapter part 51 fitted to the coupling counterpiece 51', thus bringing them both into each other's reach. Next, the coupling element 12 of the upper link arm 11 can be locked to the coupling counterpiece 51' of the work machine 50. As already stated above, a special adapter part 51, which acts as the work machine adapter of the coupling element 12 of the upper link arm 11, is arranged in the coupling counterpiece 51' of the work machine.

In the case according to the embodiment, the structural constructions of the coupling element 12 and the adapter part 51 are formed to suit each other and be detachably connected, so that the coupling element 12 can be locked to the work machine's coupling counterpiece 51' by means of an axial movement M1 of the upper link arm 11, through the adapt 51 fitted to the coupling counterpiece 51'. Thus, both the final alignment of the coupling element 12 to the counterpiece 51' and its locking take place by means of a simple linear movement, which substantially facilitates the coupling of the work machine 50 to the device 10. In other words, the relative final alignment and coupling of the coupling element 12 and the adapter part 51 take place mainly in one dimension.

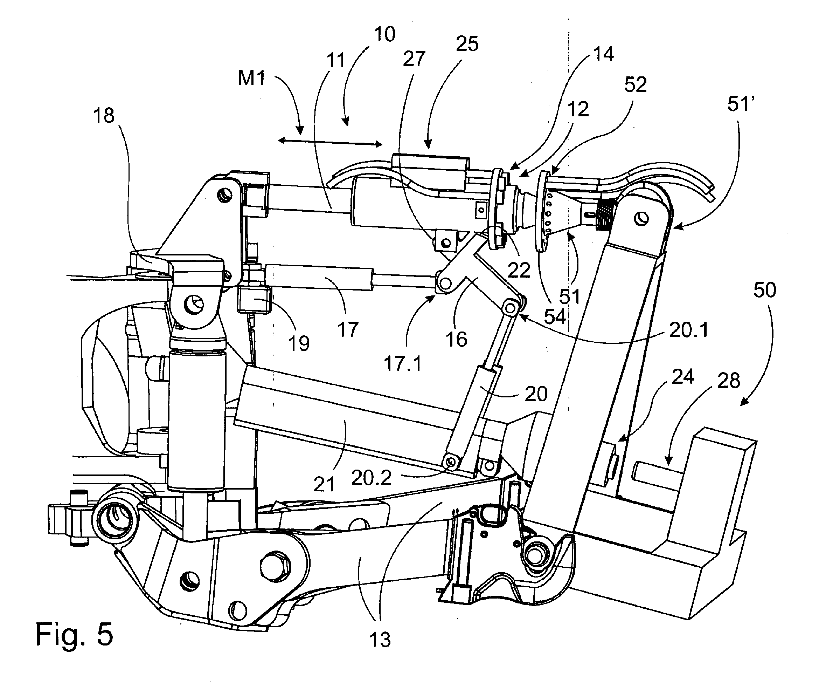

In Figure 5, the coupling element 12 of the end of the upper link arm 11 is being guided into the adapter part 51. This movement is principally achieved using the upper link arm 11. The alignment cylinder 17 can still make small vertical correction movements, or at least support the upper link arm 11 vertically. The rotation operating device 19 can be used to make horizontal correction movements.

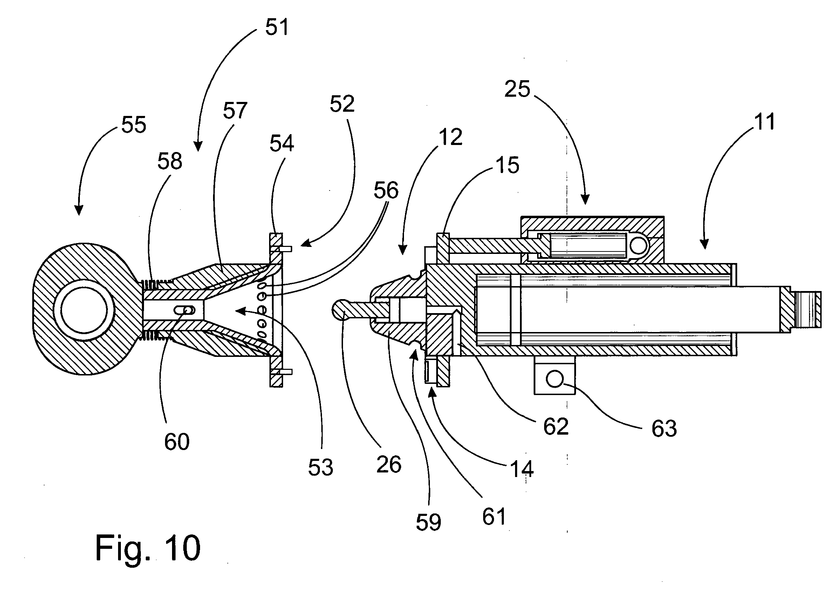

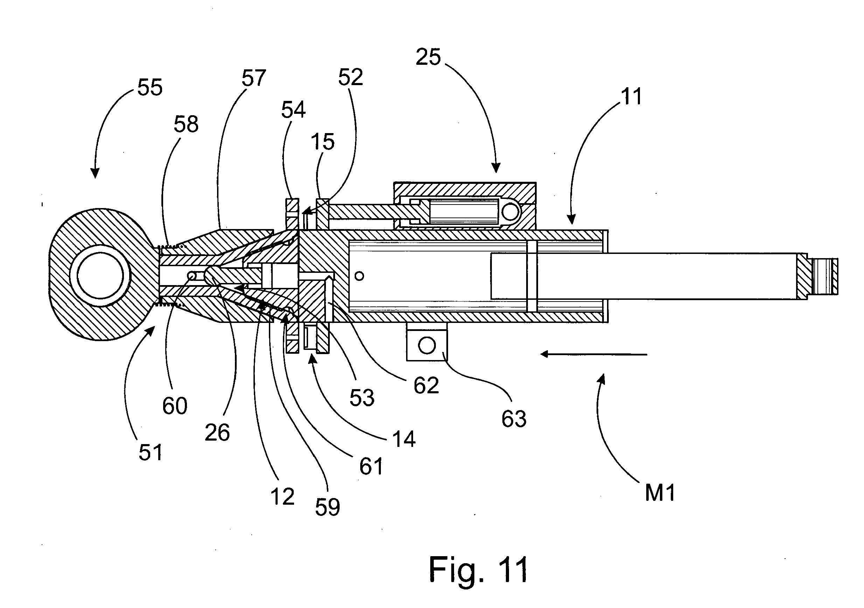

Figures 9 and 10 show a schematic example application of the coupling element 12 fitted to the end of the upper link arm 11 and of the adapter part 51 fitted to the work machine 50 while correspondingly Figures 11 - 13 show cross-sections of the sub-stages of the coupling and locking principle of the upper link arm 11 and adapter part 51 according to Figure 9. According to one embodiment, the coupling element 12 and the adapter part 51 can form between them an annular-locking male-female joint. One way to implement such a locking joint is to apply the quick-release analogy known from the field of hydraulics, of which the so-called push-pull joint is an example.

In the adapter part 51, there can be, for example, an open ring 55, by means of which it is attached to the coupling counterpiece 51' of the work machine 50, which can be, for example, fork-like. In the coupling counterpiece 51', there can be a ball joint (not shown) to achieve a movement clearance. Of course, in place of the ring 55, there can also be a quick connection clamp, by means of which the adapter part 51 can be installed on a coupler ball (not shown) fitted to the coupling counterpiece 51' of the work machine 50.

According to one example embodiment, the adapter part 51 can include an alignment seating, which acts as the female part of the joint. The seating 53 can be adapted, for example, to the shape of the rotation piece, being in this case conical. The shape of the ring 55 can be adapted to be such that the seating 53 of the adapter part 51 will retain its alignment towards the device 10 and cannot hang down. In the ring 55, or more generally the adapter part 51, there can also be a carrier spring, counterweight, or similar construction creating an alignment property. More generally, when installed on the coupling counterpiece 51' of the work machine 50, the adapter part 51 is pre-aligned towards the coupling element 12 of the upper link arm 11, for which there are corresponding pre-alignment means 55 in the adapter part 51.

On the inner circumference of the alignment seating 53 of the adapter part 51, there can be locking elements, such as steel balls 56 or a locking ring that is unified or formed of pieces (not shown), which are arranged to move radially. The locking elements 56 are one part of the ring locking. To change the radial position of the locking elements 56 in a synchronized manner, a locking collar 57, arranged to move backwards and forwards axially, is fitted to the outer circumference of the adapter part 51. The locking collar's 57 return and loading spring 58 is between the locking collar 57 and the ring 55.

Correspondingly, in this example application, the coupling element 12 includes a guide element 26 for centring the coupling element 12 in the seating 53 of the adapter part 51. The guide element 26 protrudes from the end of the upper link arm 11 and is in the centre of the coupling element 12. A conical outer surface 59, which acts as the male part of the coupling, is fitted precisely to the alignment seating 53 around the guide element 26. At the base of the conical head 59 is the counterpiece of the locking elements 56, which in this case is an annular groove 61. It forms the second part of the ring locking.

In the coupling element 12, the coaxial guide element 26 can be a piston that moves axially backwards and forwards. The guide piston 26 can be used to open the ring locking 53, 61 between the coupling element 12 and the adapter part 51. The guide element 26 can, for example, be operated by a medium, in which case there will be a channel 62 in the upper link arm 11 to lead the medium to and from the cylindrical space, in which is the piston-like tod of the guide element 26. Thus, an operating device 26, which is now a guide piston, is fitted in connection with the coupling element 12. Here, the piston 26 is used to open the locking.

Correspondingly, the moving counterpiece 60 of the ring locking 56, 57, to which the medium-operated guide element 26 is fitted to act on the coupling element 12, can be inside the alignment seating 53 on its bottom. Thus, the guide element 26 will also have the property of being the locking's operating element, which will substantially simplify the construction of the upper link arm 11.

As can be seen from Figures 9 - 13, according to one embodiment, the connection counterpieces 14, fitted to the tractor for the work machine's 50 possible operating-device and control connections, can be surprisingly integrated with the upper link arm 11 and the adapter part 51. More particularly, the connection counterpieces 14 in the upper link arm 11 can be rigidly attached to the coupling element 12. In that case, their connection and disconnection can also be handled by an axial movement M2 from the end of the upper link arm 11. One way to implement this is to arrange, for example, flange-like elements 15, 54, into which the hydraulic and/or electrical connectors 14, 52 are rigidly integrated, in the coupling element 12 and the adapter part 51. Instead of flange-like elements 15, 54, the connection counterpieces 14, 52 can be fitted to some other kind of industrially manufactured connector/support component. More generally, the elements 15, 54 can be referred to as, for example, the end counterpieces of the connectors 14, 52.

In the flanges 15, 54, there can be as such known hydraulic push-pull quick-release connectors (not shown), which can be connected to, and disconnected from each other by simply an axial pushing and pulling movement. For this purpose, the upper link arm 11 can include a double-acting hydraulic cylinder 25 for docking the connection counterpieces 14 in the corresponding connection counterpieces 52 of the adapter part 51, and correspondingly also for detaching them.

In Figure 6, the end of the coupling element 12 has entered the alignment seating 53. As Figure 11 shows, the final alignment of the coupling element 12 takes place using the ball at the end of the guide element 26, which corresponds to the inner surface of the seating cone 53 and guides the outer conical surface 59 of the element 12 into, and aligns it with the seating 53.

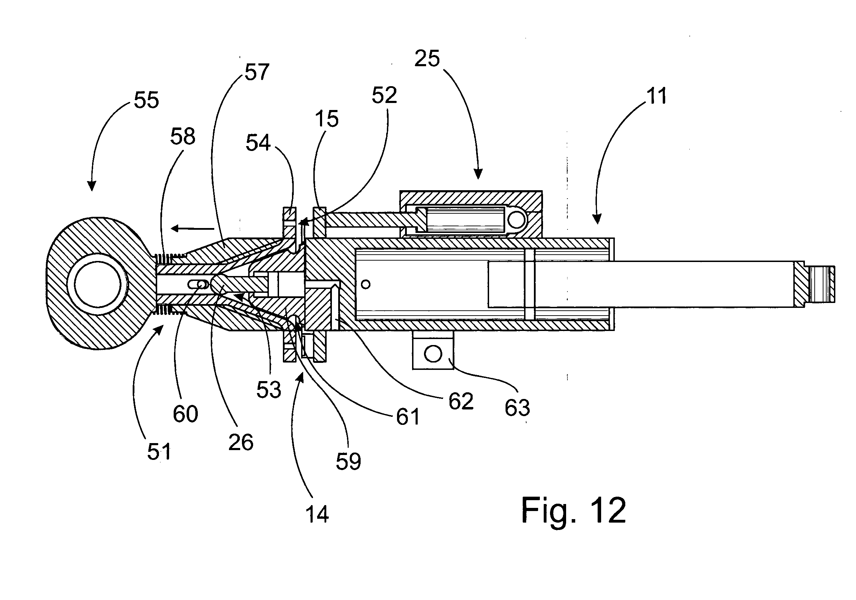

Figure 12 shows the actual locking event. Once the ball head of the guide-element piston 26 reaches the bottom of the seating 53, hydraulic pressure medium can be fed through the channel 62 to the cylindrical space of the guide-element piston 26. This causes the ball-headed guide-element piston 26 to push increasingly out of the cone part 59. By means of a pin 60 protruding through the body of the adapter part 51, the piston 26 pushes the spring-loaded 58 sliding collar 57 axially backwards. The ball locking 56 then opens, i.e. the annularly arranged locking balls 56 are free to withdraw radially from the inner circumference of the seating 53. This permits the element to penetrate completely into the seating 53.

As a result of the above, the axial position of the groove 61 of the coupling element 12 corresponds to the position of the locking ring 56. Once the pressure of the guide piston 26 has been released, it withdraws backwards partly inside the element 12, allowing the collar 57 to return to its initial position, due to the loading spring 58. The collar 57 presses the balls 56 in the holes in the circumference of the alignment cone 53 radially into the seating 53. Thus, the locking elements 56 settle into the groove 61 in the base of the alignment cone 59 of the upper link arm 11. This procedure causes the adapter part 51 to be rigidly connected to the coupling element 12 of the upper link arm 11.

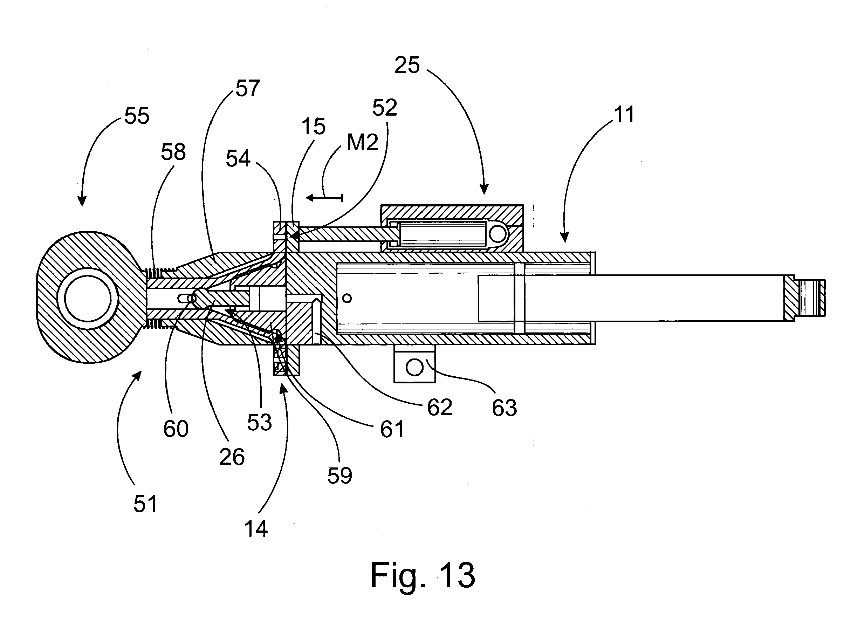

In Figure 13, the connection of the hydraulic and electrical connections 14, 52 fitted to the flanges 15, 54 is performed. The connection can take place, for example, in such a way that an operating device 25 is used to push the flange 15 at the end of the element 12 towards the corresponding flange 54 of the adapter part 51. The hydraulic and electrical connections 14, 52, which face each other lock to each other and the arrangement according to Figure 6 is achieved. Understandably, the significance of each hydraulic and electrical connection 14, 52, such as the hydraulic inlets and outlets, is standardized and the activation and significance of each connection in the case of a specific work machine can be selected, for example programmatically. There can be sensors in the upper link arm 11, by means of which the success of the connection can be detected.

The uncoupling of the upper link arm 11 from the adapter part 51 can be performed, for example, in the opposite sequence. The operating device 25 can be used to pull the flange 15 away from the flange 54 of the adapter part 51. The hydraulic and electrical connections will then detach. By pushing the guide piston 26 out of the cone part 59, the pin 60 in the bottom of the alignment seating 53 is pushed, when the locking collar 57 moves backwards and releases the locking balls 56. When the upper link arm 11 is pulled inwards, the coupling element 12 detaches from the adapter part 51 and in this case thus from its seating 53.

As can be seen already from Figures 2 - 6, according to one embodiment it is also possible to arrange to the device 10 the motorized alignment of the coupling element 24 of the power take-off shat, i.e. the so-called articulated shaft 21 and, in addition, even its coupling to the work machine 50. The alignment and coupling of the articulated shaft 21 can be performed, for example, once the locked coupling of the upper link arm 11 and its possible connection counterpieces 14, 52 has been achieved.

The coupling of the articulated shaft 21 to the work machine 50 is described in greater detail with reference to Figure 7. The power take-off shaft 21 can, through the invention, be aligned with a counterpiece 28 fitted to the work machine 50 surprisingly using the same alignment means 16, 17, 19 by which the alignment of the upper link arm 11 is performed. In this embodiment, a set of carrier arms 20, in which in this case there are two arms in parallel, is connected from one end 20.1 to the auxiliary pivot arm 16, more generally to the alignment means of the upper link arm 11. The auxiliary pivot arm 16, and thus ultimately also the upper link arm 11 then act as a suspension point for the arms 20. The arms 20, which can be, for example, telescopic and lightened by a spring, are attached at the other end to the articulated shaft 21, for example, close to its end on the coupling element 24 side. The telescopic and spring-lightened construction of the carriers 20 permits a more flexible coupling of the articulated shaft 21 to the work machine 50.

By using the alignment means 16, 17, 19 of the upper link arm 11, the position of the coupling element 24 at the end of the articulated shaft 21 can also be aligned horizontally and vertically through the carrier arms 20. This takes place when the upper link arm 11 is coupled to the work machine 50. In other words, the carrier arms 20 of the articulated shaft 21 can react to the movements of the cylinder 17 and the rotation device 19 through the auxiliary pivot arm 16 (raise-lower and rotation to the left and the right). Thus, by means of the first operating-device means 17, the coupling element 24 can be raised and lowered to be set in a suitable vertical position for coupling it to the coupling counterpiece 28 of the work machine 50. The raising and lowering movement is permitted by the auxiliary pivot arm 16 rotatably pivoted to the upper link arm 11. More particularly, the outer support surface 22 of the auxiliary pivot arm 16 permits the auxiliary pivot arm 16 an area of movement, such that the vertical position of the end 24 of the work-machine 50 end of the articulated shaft 21, suspended through the point 17.1 of the auxiliary pivot arm 16 can be aligned with the upper link arm 11 using the same cylinder 17. Of course, instead of the arms 20 there can also be an implementation using operating devices.

Correspondingly, the horizontal position of the coupling element 24 of the articulated shaft 21 can be altered using the rotator 19, through the arm 17, the auxiliary pivot arm 16, and the arms 20. The articulated shaft 21 can thus be rotated to a limited extent (correction movement) by the rotator 19, even when the upper link arm 11 is coupled. For its part, this is permitted by the elastic pivoting of the auxiliary pivot arm 16 to the upper link arm, for example, using a ball joint 27. The articulated shaft 21 can thus be raised and lowered and rotated to a limited extent using the alignment means 16, 17, 19 even when the upper link arm 11 is coupled. Thus, using the same alignment means 17, 19, it is surprisingly possible to obtain both vertical and horizontal alignment of both the upper link arm 11 and the articulated shaft 21, relative to the attachment points 51, 28 of the work machine 50.

As already stated above, the auxiliary pivot arm 16 can be fitted to the upper link arm 11, for example, using a ball joint 27. The ball joint 27, or stated more generally the elastic pivot, which can be, for example, like a bush in the suspension arm of a car, can have a limited lateral rotation sector. The form of implementation offered by the ball joint 27 permits the articulated shaft 21, which is suspended if necessary from the auxiliary pivot arm 16, to be moved to the right and the left through the auxiliary pivot arm 16, in a situation in which the upper link arm 11 is already locked to the work machine's 50 coupling counterpiece 51, using the same rotation device(s) 19, which are used when rotating the upper link arm 11. More generally, the elastic pivot 27 for aligning the power take-off shaft 21 particularly horizontally when the upper link arm 11 is coupled to the work machine, is fitted between the power take-off shaft 21 and the alignment means 16, 17, 19.

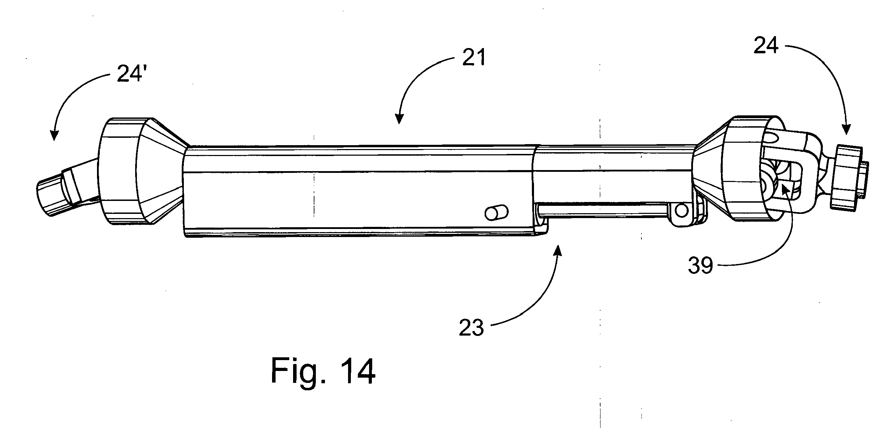

At the same time as the coupling element 24 of the articulated shaft 21 is aligned with the coupling counterpiece 28 of the work machine 50, the coupling element 24 can be moved in the axial direction of the shaft 21 axially towards the coupling counterpiece 28 of the work machine 50. For this purpose, the articulated shaft 21 can be equipped, for example, with a telescopic operating device 23, for altering its length (Figure 14). The operating device controlling the lengthening and shortening movement of the articulated shaft 21 can be double-acting cylinder 23, which is as such known.

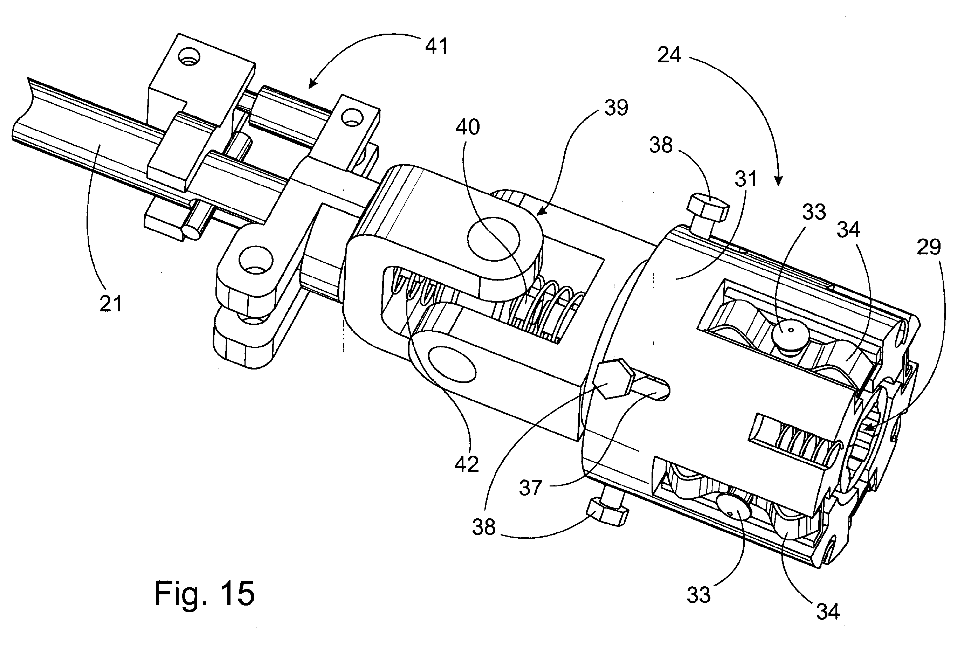

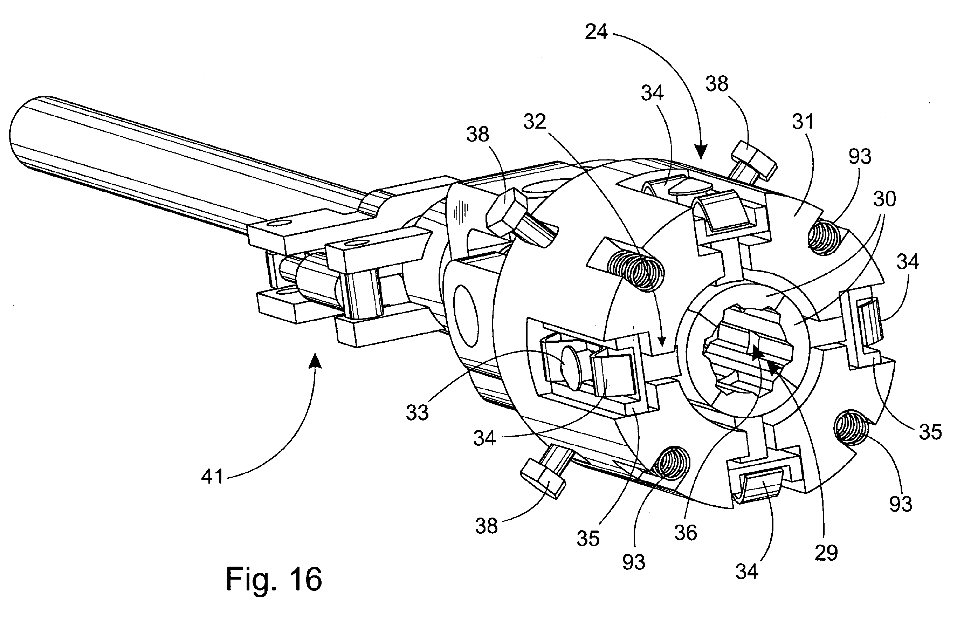

Figures 15 and 16 show one example of the coupling head 24 of the articulated shaft 21. The coupling head 24 can be integrated with the articulated shaft 21, or it can also form its own retrofitted component, which is attached to the end of a articulated shaft that is, as such, known from the prior art. The grooved counterpiece 29 of the coupling element 24 fitted to the end of the power take-off shaft 21 can be surprisingly such that it can change its radial shape. This property is used to gain several important benefits. Firstly, the radial expansion of the grooved opening 29, which takes place returnably, permits a small degree of imprecision when aligning the coupling element 24. The grooved counterpiece 29 need not necessarily be completely in the same line as the grooved shaft 28 (or some other corresponding special coupling piece) of the work machine 50, but instead they can be on slightly different lines or at slightly different angles to each other, and nevertheless they can still be fitted inside each other. Secondly, the shapes of the grooved shaft 28 and the counter shapes of the grooved counterpiece 29 need not be absolutely next to each other circumferentially. Despite a lack of circumferential alignment of the elements 28, 29, the grooved counterpiece 29 can still be coupled to the grooved shaft 28 and the groove shapes set into the counter shapes.

In the circumferential direction, the grooved counterpiece 29 can be divided, for example, into sector-like segments 30, as can be clearly seen from Figure 15. The grooved-element blocks 30 can be changed, so that the same articulated shaft 21 or coupling head 24 can be used in work machines with differing groove divisions. The blocks 30 can move in the radial direction of the grooved opening 29 and, on the other hand, they can also give slightly in the circumferential direction of the coupling head 24.

The body of the coupling element 24 can be a unified cylindrical piece, in which there are radial movement spaces of the pillar blocks 29, which movement spaces are wider by the movement tolerance and which support and align the grooved-counterpiece 29 segments. The segments of the grooved counterpiece 29 can be in a pillar block 32, which is radially in the coupling element 24 and is located in a radially arranged slot in the body 31. At the upper end of the pillar block 32, there are, in order, an end 33 with a mushroom-like small contact surface, a plate spring 34 for holding the block construction 30 together, the end plane 35 of the pillar 32, and a possible plate spring (not shown) under the end plane 35 for moving the locking element 36 radially out of the grooved opening 29. Of course, it is possible to manage even without this plate spring acting on the locking element 36, because in relation to this the important thing is for the locking elements 36 in the blocks 30 of the grooved opening 29 to be free to move out radially farther than the outer diameter of the grooved shaft 28 of the work machine 50.

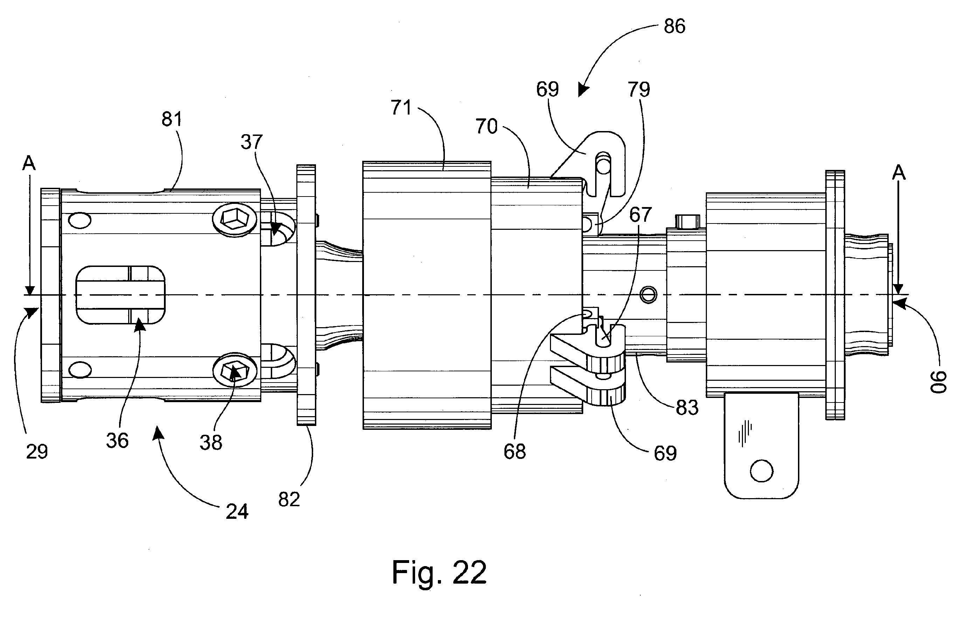

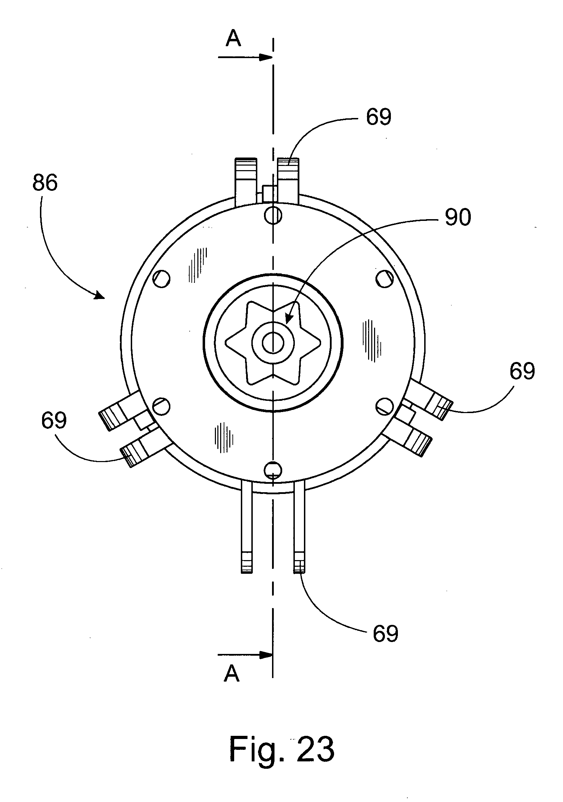

Locking of the coupling head 24 is arranged to take place in such a way that, when fitting the grooved counterpiece 29 to the grooved pin 28, the coupling head automatically locks onto the pin 28. The coupling 24 is detached from the counterpiece 28 in such way that the locking collar 81 (Figures 22 and 23) on the outer circumference is either rotated circumferentially or is pulled backwards axially towards the universal joint 39 of the power take-off shaft 21. The return springs 93 of the locking collar 81 appear in axial holes drilled in the outer circumference of the body 31 of the coupling element 24. Thus, the locking elements in an annular arrangement in the grooved opening 29, being, for example, an enclosed ring 36 or separate locking studs, move radially in a manner that is, as such, known and release the grooved shaft 28, in the annular groove of which the locking elements 36 have been fitted.

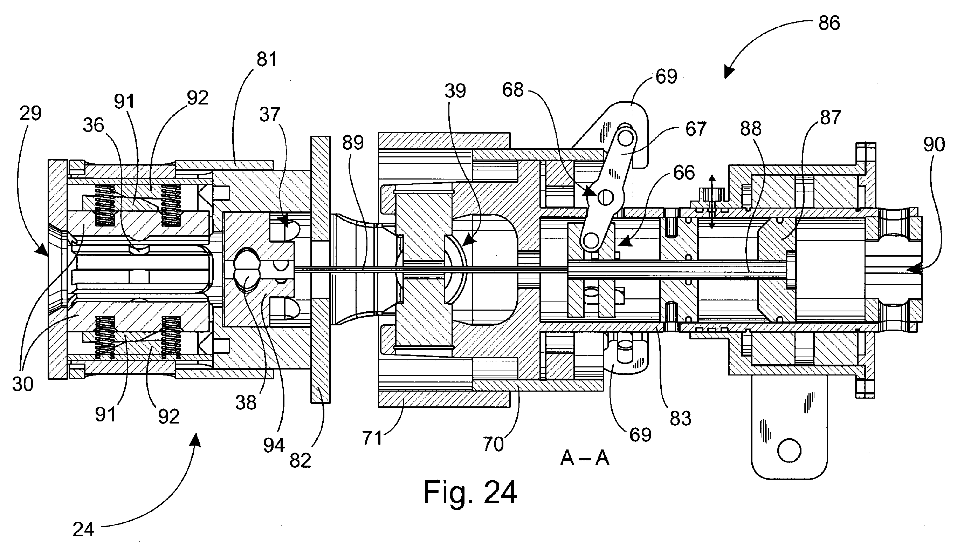

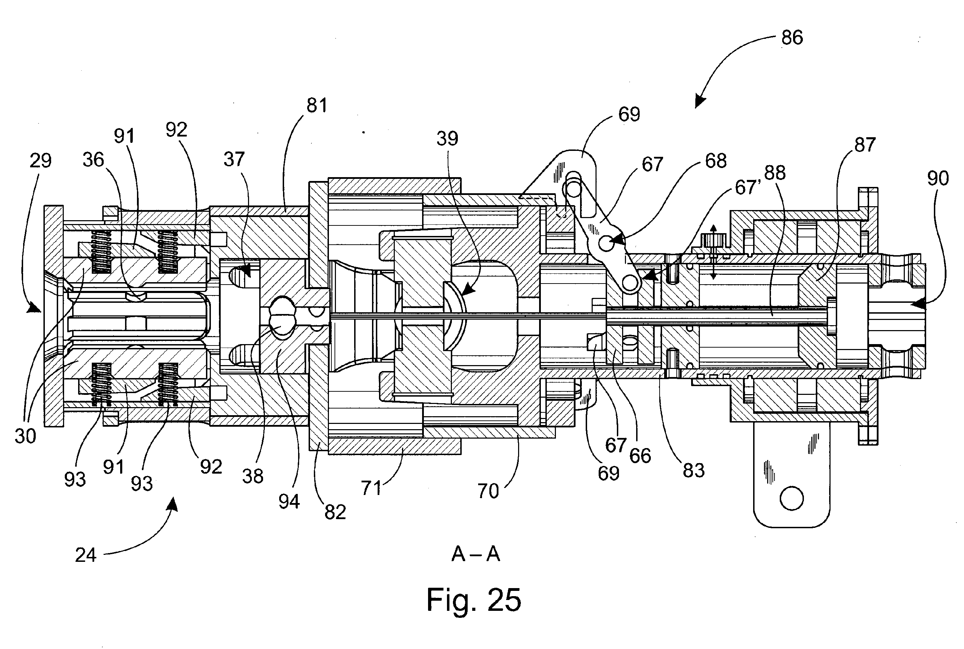

Axial elongated openings 37, in which there are bolts 38 in a radial direction, are arranged in the body 31 of the locking element. The upper heads of the bolts 38 attach to the locking collar (reference number 81 in Figures 24 and 25) and by means of them the locking collar can be moved axially. At the location of the bolts 38 in the hub of the body 31 there can be a four-branched attachment element (reference number 94 in Figures 24 and 25), which is attached to a axial-movement mechanism fitted to the centre of the coupling element 24, to allow the bolts 38 and thus also the locking collar 81 attached to them to be moved axially. Of course, the locking collar 81 can also be moved, for example, by a cable pull, for example through the hub 39 of the universal joint, as is shown later in the embodiment according to Figures 24 and 25.

Figure 15 shows one way of implementing the release mechanism of the locking of the articulated shaft 21. The transfer movement of the four-branched attachment element 94 is created surprisingly in such a way that it takes place through the hub of the universal joint 39. In this embodiment, at the location of the universal joint 39 there is an axially moving pin 40 in the hub, which permits the operation of the universal joint 39. In addition, in the hub of the joint 39 (or also on its outer circumference, Figures 24 and 25) there can also be a structural solution, which is around the pin 40, assisting the alignment of the articulated joint 39 and preventing the 'collapse' of the joint 39. One way to implement this is a helical spring 42. The spring 42, which supports the joint 39 and keeps the opening 29 of the coupling element 24 correctly aligned, for its part facilitates the automatic coupling of the articulated shaft 21. By means of it, the grooved counterpiece 29 in the coupling head 24 is brought to a suitable position relative to the coupling counterpiece 28 of the work machine 50 and coupling is permitted.

On the side of the power transmission shaft 21 relative to the joint 39 there is a lever mechanism 41 with an operating device, which acts on the pin 40. Correspondingly, on the coupling-element 24 side the pin 40 is connected to the locking collar 81 by means of the four-branched attachment element 94 and the bolts 38. Thus, a force opening the locking of the grooved counterpiece 29 is arranged to be created on the other side of the universal joint 39 and arranged to be transmitted through the hub of the universal joint 39 in connection with the grooved counterpiece 29. The construction is surprisingly simple, if allowance is made for the fact that the force for opening the locking of the grooved counterpiece 29 is provided through the hub of the universal joint 39.

The operating principle of the coupling element 24 described above and later can also be applied equally when coupling the articulated shaft 21 to the power take-off of the tractor. In that case, in the coupling situation, the articulated shaft 21 can be arranged to be attached to the work machine 50, while the actual coupling event takes place between the coupling element 24' (Figure 14) of the articulated shaft 21 and the tractor's power take-off counterpiece.

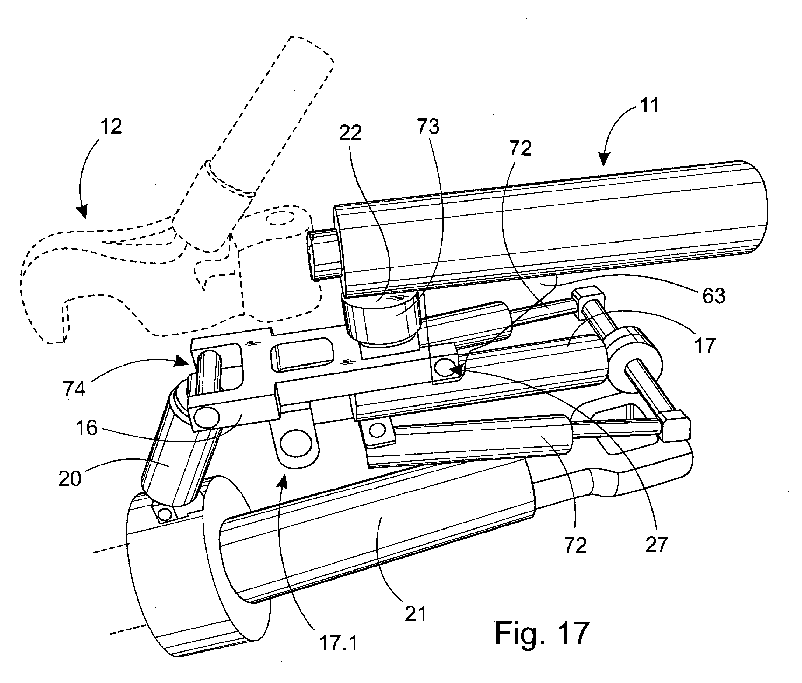

Figure 17 shows a side perspective view of another way to implement the upper link arm 11 and in this case also the articulated shaft's 21 alignment means 16, 17, 19, 72. Here, the same reference numbers are used for functional components that correspond to those in the previous embodiment. This implementation differs from the previous embodiment in the case of the alignment means and even more particularly of the second operating devices, in that now the horizontal alignment movement of the upper link arm 11 takes place by means of two linear-movement operating devices 72, which are located on both sides of the vertical-movement operating device 17 of the upper link arm 11. At the end nearest the tractor, the operating devices 72 are pivoted on the same shaft as the operating device 17 that changes the vertical position of the upper link arm 11. At the opposite end, the operating devices 72 are pivoted to the cylindrical part of the operating device 17.

In addition to the above, the auxiliary pivot arm 16 too differs slightly from the embodiment described above. Now, the attachment point of the auxiliary pivot arm 16 on the upper link arm 11 is closer to the tractor than the attachment of the operating device 17 to the auxiliary pivot arm 16. Here too, the elastic pivot 27 is at the pivot point of the lug 63 and the auxiliary pivot arm 16. Now, a rubber element 73, through which the upper link arm 11 can rest on the auxiliary pivot arm 16, is fitted as a support surface 22 on the auxiliary pivot arm 16.

In this case, the alignment mechanism of the articulated shaft 21 too is implemented in a slightly different manner. Now, it is implemented using only a single carrier arm 20, which is fitted to the fork 74 fitted to one branch of the auxiliary pivot arm 16. Here too, the alignment of the articulated shaft 21 is performed using the same alignment means 16, 17, 72 as the alignment of the upper link arm 11.

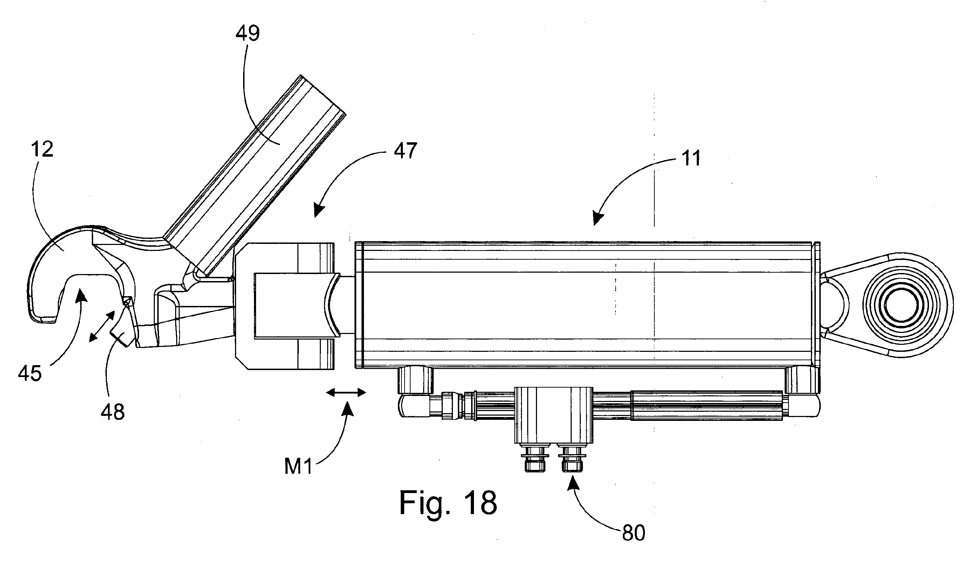

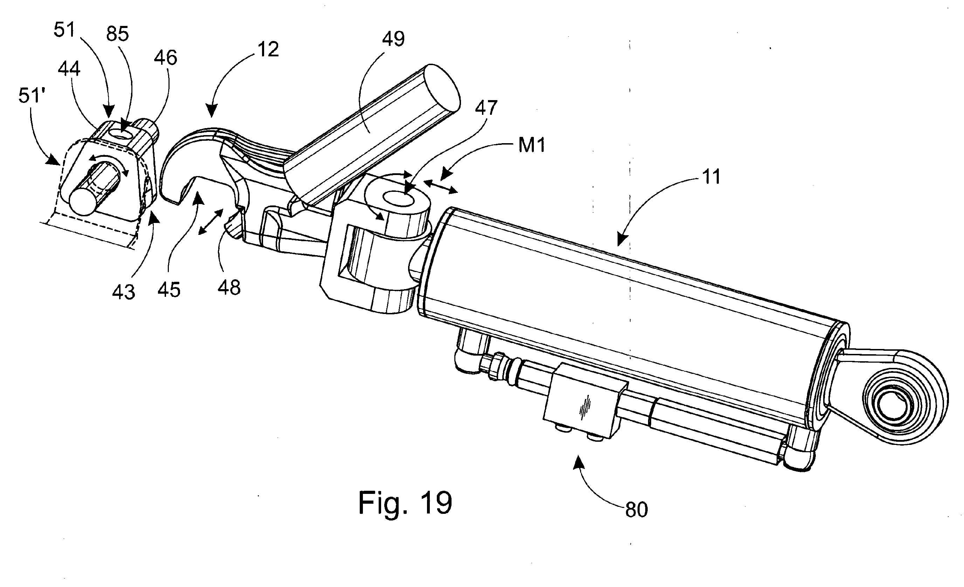

Figure 18 shows a side view of a second embodiment of the upper link arm 11, while Figure 19 shows this in perspective. In addition, Figure 19 shows a second example application of the coupling counterpiece 51, more generally the adapter part, to be arranged in the work machine 50. Again, the same reference numbers as in the previous embodiment are used for corresponding functional components. Now, the coupling element 12 of the upper link arm 11 applies in its basic mechanism the operating principle of a quick-release clamp, which is, as such, known. In the case of the clamp 12, a vertical movement too can be associated with the coupling of the upper link arm 11, if the clamp 12 comes to the coupling counterpiece 51 fitted to the work machine, for example at an angle from above. Of course, the clamp 12 can also be coupled to the work machine by means of an axial movement. Applying a clamp as the coupling element 12 makes the upper link arm 11 shorter than in the previous embodiment.

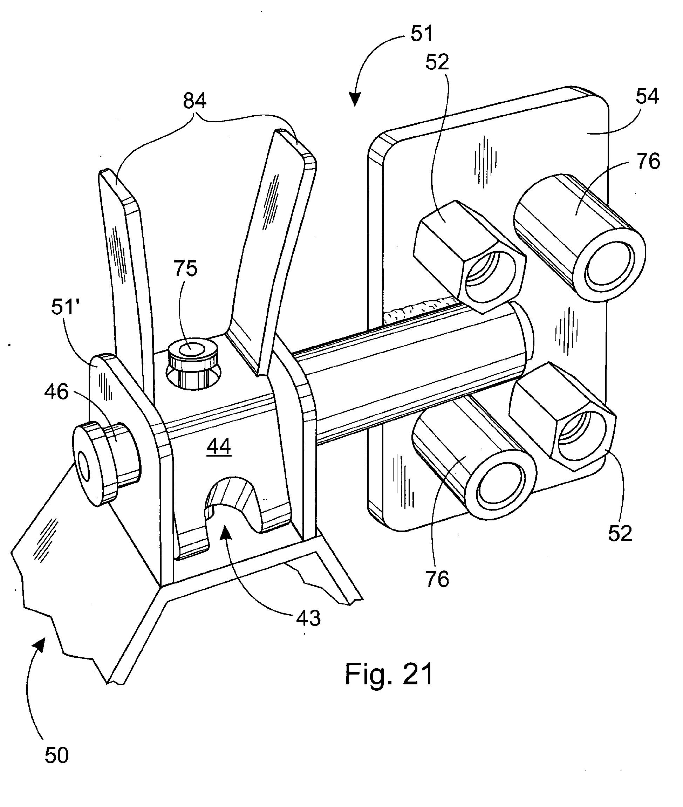

It will be seen from Figures 18 and 19 that, in this case, there is pivoting on both sides of the coupling point of the upper link arm 11 to the work machine 50. More generally, the movement tolerance arranged between the upper link arm 11 and work machine 50 is arranged to be created partly on the thrust-arm 11 side and partly on the work-machine 50 side. The movement tolerance (pivoting in the horizontal and vertical directions) on both sides of the upper link arm 11 resolves the connecting of the coupling counterpieces 14, 52 firmly and functionally to each other, in such a way that the structure retains its rigidity. By means of the movement tolerances on both sides, the hydraulic and electric connection piece 15 (Figure 21) locked firmly to the work-machine counterpiece 51 can be rigidly connected to the corresponding connection piece 54 on the thrust-arm 11 side. In addition, pivoting also permits work-machine side connection counterpiece 44 of the adapter part 51 fitted directly to the fork 51' cannot rotate horizontally, for example like a ball joint, such as takes place in the first embodiment in the case of the ring 55 fitted to the fork 51' by means of a ball joint. In that sense, the first embodiment is, in the case of the arrangement of the movement tolerance, simpler, because the connection of the upper link arm 11 to the adapter part 51 and the connection counterpieces 14, 52 are integrated in the same structures.

Now, the vertical pivot of the thrust-arm 11 side permits a horizontal movement tolerance. The adapter part 51 fitted to the work-machine 50 side and arranged on the coupling counterpiece 51' permits a vertical movement tolerance, being rotatable through the shaft 46 in the coupling counterpiece fork 51' (Figure 19). In addition, in this embodiment the change M1 in the length of the upper link arm 11 takes place at the end of the cylindrical part on the coupling-element 12 side. The advantage of this is that the hydraulic equipment 80 of the upper link arm 11 need not move when the length of the arm 11 changes.

Now, the locking of the coupling element 12 of the upper link arm 11 is also implemented using a linear-movement mechanism. In this case, this includes a locking pin 48 equipped with an operating device 49. The locking pin 48 can be moved backwards and forwards by the operating device 49, so that it performs the locking and also opens it. There can be a corresponding groove 43 in the outer circumference of the connecting counterpiece 44 of the adapter part 51 for the pin 48.

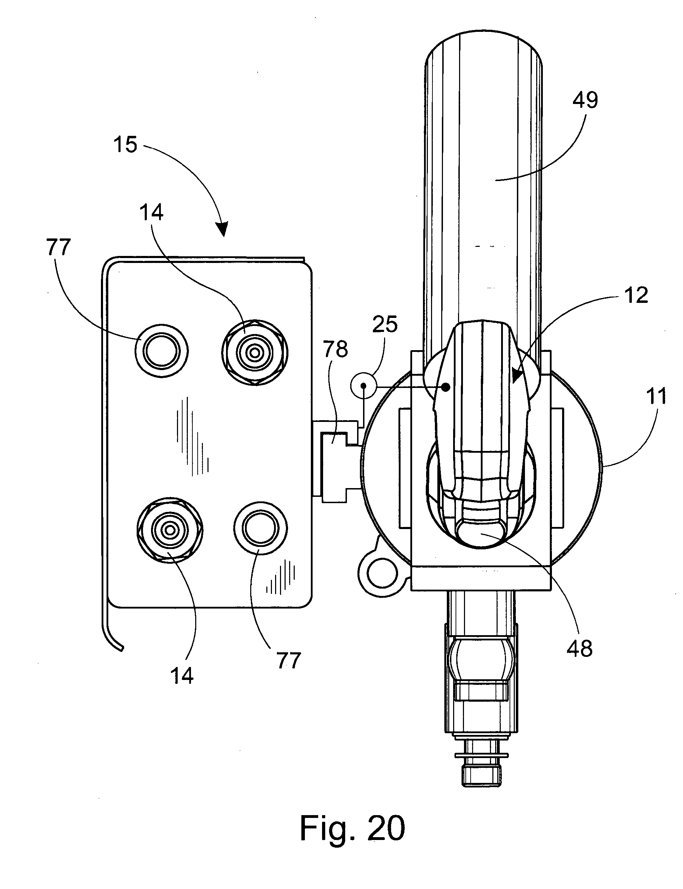

Figure 20 shows a second example of the arrangement in connection with the upper link arm 11 of the connection counterpieces 14 fitted for the operating-device and control connections.

These are not shown in Figures 18 and 19. Now, a grooved rail 78, in which a sliding carrier body 15 equipped with connection counterpieces 14 is arranged to move linearly, is permanently fitted in its longitudinal direction to the coupling element 12 fitted to the upper link arm 11 through the pivoted point 47. Thus, the body 15 too is permanently fitted to the coupling element 12.

Now, by way of example, there are two hydraulic connection counterpieces 14 in the body 15. In addition, along with the connection counterpieces 14 there are guide pins 77, which ensure the alignment of the connection counterpieces 14 fitted rigidly in connection with the coupling element 12 of the upper link arm 11 with the corresponding connection counterpieces (reference number 52, Figure 21) of the adapter part 51. The sliding carrier body 15 can move on the rail 78 by means of a double-acting linear operating device 25 attached to the coupling element 12, by means of which the operating-device and control connections 14 dock in the corresponding connection counterpieces 52 fitted in connection with the adapter part and also detach from them. As can be seen, the construction is surprisingly simple.

As can be seen from Figures 18 and 19, the clamp 12 acting as the coupling element is connected to the upper link arm 11 by a vertical pivot 47. This permits the connection of the firmly locked hydraulic and electric connections 14, 52 to adapt to possible small lateral movements of the work machine 50. The vertical pivot 47 between the coupling element 12 and the upper link arm 11 can be equipped with a rubber guide that recovers a straight shape, so that the coupling element 12 will not 'twist' to the side of the vertical pivot 47.

Figure 21 shows a perspective view of a second implementation of the adapter part 51, fitted in connection with the upper link arm 11 and particularly its coupling element 12, for the connection counterpieces 14. Also in this embodiment, the connection counterpieces 52 for the operating-device and control connections are fitted rigidly in connection with the adapter part 51. In the adapter part 51 is a body 54 equipped with an axle pin 46. In the body 54, there are now only the hydraulic connectors 52 together with their guide sleeves 76, which can be fitted to the corresponding connectors 14 and guide pins 77 arranged in connection with the upper link arm 11, which were described above. In the axle pin 46 is the upper link arm's 11 coupling element's 12 counterpiece 44, attached by bolts 75. Thus, the counterpiece 44 cannot rotate relative to the axle pin 46. In other words, in this case too the adapter part 51 is installed in the work machine 50 pre-aligned towards the coupling element 12 of the upper link arm 11.

In the counterpiece 44 there are 'ears' to facilitate seeing the counterpiece 44 from the tractor cab. The adapter part 51 is attached to the fork-like coupling counterpiece 51' of the work machine 50 by the axle shaft 46. Thus, the fork of the coupling counterpiece 51' is set on both sides of the counterpiece 44. Because the axle pin 46 can rotate in the fork of the coupling counterpiece 51' (Figure 19), it permits the direction of the counterpiece 44 and the connection counterpieces 52 to be changed vertically and more generally a vertical movement tolerance.

The upper link arm 11 coupling element 12 and the adapter part 51 coupling counterpiece 44 can be shaped so that they fit each other in a predetermined position, which again achieves the rigid coupling of the adapter part 51 to the upper link arm 11 coupling element 12. The coupling counterpiece can be an angularly shaped piece 44, with slightly rounded corners. The under surface of the shaped piece 44 can, for example, correspond to the coupling fork 51', or the fitting of the axle pin 46 to the fork 51' can be arranged in such a way that the adapter part 51 remains in a constant position in the fork 51' and thus the shaped piece 44 cannot substantially rotate relative to the coupling fork 51' when it is not loaded. In this embodiment too, springs or counterweights can be applied. In any event, the shaped piece 44 and thus also the adapter part 51 are permitted a small rotational movement in the fork 51' (Figure 19), in order to achieve a vertical movement tolerance. In other words, in this case too, the adapter part 51 is installed pre-aligned towards the coupling element 12 of the upper link arm 11 while the connection counterpiece 44 of the adapter part 51 itself acts as the pre-aligning element. In addition, pre-alignment also ensures the alignment of the connection counterpieces 14, 52 rigidly fitted to the connection counterpieces 12, 44. In the shaped piece 44, there is a through hole 85 (Figure 19), from which it is secured to the axle 46 by a bolt 75. Being in a fixed and rigid arrangement relative to each other, the counterpiece 44 of the adapter part 51 and the connection counterpieces 52 are always correctly aligned to the corresponding elements set in a fixed arrangement relative to each other on the upper link arm 11, i.e. to the coupling element 12 and the connections 14.

Figure 22 shows a side view of a second embodiment of the coupling head 24 of the power take-off shaft 21 and the end piece 86 with the straightening mechanism while Figure 23 shows a corresponding end view and more particularly a view from the coupling side of the articulated shaft 21. Figures 24 and 25 show its cross-section A-A, the locking and straightening mechanism being in different operating positions. In Figure 24, the coupling element 24 is locked and the straightening mechanism permits the free alignment of the universal joint 39. Correspondingly, in Figure 25 the coupling element 24 is open for coupling and the straightening mechanism has straightened the universal joint 39. As is known, the coupling head 24 hangs down by gravity from the universal joint 39 and must be straightened to a suitable position relative to the coupling counterpiece 28 of the work machine 50 when the coupling of the articulated shaft 21 is started. This hanging down can be seen, for example, in Figure 14, though in that case it is only shown to be slight.

The straightening mechanism includes a pulling element 66 arranged in the cylindrical part 83. The pulling element 66 can be pulled to the right in the cylindrical part 83 by means of the piston rod 88 connected to the piston 87. The piston 87 is moved by, for example, a hydraulic medium, the feed and removal of which to and from the cylindrical part 83 is shown by a double-headed arrow. The lever arms 67 pivoted from one end 67' to the pulling element 66 rotate around a pivot 68. As the lever arms 67 are at opposite ends outside the cylindrical part 83 and in a fork claw 69 fitted to the second cylindrical part 70, the second cylindrical part 70 together with the collar 71 moves axially left, i.e. towards the coupling head 24. Through this, the coupling head 24 of the shaft 21 is forced to straighten, when the flange 82 in the coupling head 24 makes contact with the elastic outer collar 71. In other words, the straightening mechanism is based on a movement converter, in which the linear movement (piston 87) is converted into a rotational movement (pivot 68 and arms 67) and then back into a linear movement (sleeves 70, 71). In addition, axial forced control is utilized, which takes place between the straightening flange 82 and the straightening collar 71.

Correspondingly, the flange 82 of the coupling head 24 is released from the elastic collar 71 by a force acting from right to left. Its force is created by axial springs (reference number 93, Figure 16) that move the locking collar 81 of the coupling element 24 towards the locking position. The force is transmitted by a tension cable 89 running through the hub of the universal joint 39, which is connected at one end to the coupling-head 24 side pulling element 94 and at the other to the straightening-mechanism side piston rod 88. The solution allows the locking of the coupling head 24 to be opened and the operating of the straightening mechanism to be controlled using the same single-acting piston 87, which make the solution very simple. Correspondingly, the return of the coupling element 24 to the locking position and the release of the straightening mechanism can also take place using a common operating mechanism.

The pulling element 66 of the lever arms 67 together with the piston 87 and piston rod 88 is inside the innermost cylindrical part 83. The pivoting of the lever arms 67 is put inside the pulling element 66 by machining a circumferential groove in the pulling element 66. The rotation of the lever arms 67 is made possible by means of radial grooves arranged in the pulling element 66. Lugs 79 (Figure 22) for the rotation pivot 68 of the lever arms 67 are arranged on the outer surface of the cylindrical part 83. There are three lever arms 67, which can be arranged at regular intervals around the circumference of the cylindrical part 83. This construction is simple and very reliable in operation, because the lever arms 67 load the set of collars 70, 71 evenly from all sides. It is obvious that this straightening mechanism can be also applied equally to the coupling of the articulated shaft's 21 coupling element 24' (Figure 14) to the tractor's power take-off.

The following describes the locking mechanism of the coupling head 24 shown in Figures 24 and 25. Now, there are two rings 91, 92 with a bevelled edge on the outer circumference of the blocks 30 of the groove counterpiece 29. The blocks 30 are loaded by springs 93 against the inner surface of the outer circumference of the coupling head 24. Thus, the springs 93 permit a slight returnable radial movement in the blocks 30 and thus a slight lack of alignment of the work machine's 50 coupling counterpiece 28 with the coupling element 24. Thus, when the cable 89 and ultimately the piston 87 are used to pull the connection element 94, the locking collar 81 move towards the right. Through this, the locking ring 92 withdraws axially from second locking ring 91 arranged in connection with the blocks 30. Thus, a small gap is formed between the locking elements 91, 92, which permits a slight radial movement in the blocks 30, which allows the counterpiece 28 of the work machine to be brought inside the grooved counterpiece 29 and to be locked firmly to the counterpiece 29 by means of the locking element 36.

When the springs 93 (Figure 16) return the locking collar 81 to the outer circumference of the coupling element 24, the locking ring 92 returns axially to the outer circumference of the second locking ring 91. This is assisted by the bevelled shape of the edges of the locking rings 91, 92 that face each other. The arrangement is dimensioned so as to obtain a sure and reliable locking effect while nevertheless permitting a suitable movement tolerance for the blocks 30.

The arrangement 86 according to Figures 22 - 25 can be, for example, permanently in the articulated shaft 21. On the other hand, it can also form its own independent end-structure piece 86, which can be attached, for example, to a cardan-shaft arrangement known from the prior art. For this purpose there can be a connection element 90, for coupling the piece 86 to the articulated shaft, at the end of the arrangement 86, which is at the opposite end to the end with the coupling element 24.

On the basis of the above, it is obvious that the invention also relates to the power take-off shaft 21, or its end piece 86, one end of which is equipped with a coupling element 24 equipped with a grooved counterpiece 29 and which can be locked to the coupling counterpiece 28 of the work machine 50. The grooved counterpiece 29 is arranged to change its shape at least radially and to thus permit small alignment imprecisions, which can appear when fitting the coupling element 24 to the coupling counterpiece 28. Such a articulated shaft 21, end piece 86, and even more particularly coupling head 24 and/or its straightening mechanism can be applied equally in the three-point hitch device 10 according to the invention and in other coupling devices or articulated shafts according to the prior art or only in the development stage, in which the semi or fully automatic coupling of the articulated shaft 21 is utilized. Thus the applicability of the articulated shaft 21, or even its straightening mechanism and/or locking mechanism is in no way restricted solely to the three-point hitch device 10 disclosed in this application, but can be made commercially available as independent products.

The invention equally relates to an adapter part 51 for a work machine 50 for coupling it to the three-point hitch device 10. Such an adapter part 51 can be made commercially available, for example, with a work machine 50 or as a separate installation-kit package independent of the work machine 50, which being universal is suitable, for example, for all work machines. The adapter part 51 can be fitted to the coupling counterpiece 51' of the work machine 50. It includes its own special coupling counterpiece 44, 53, to which the corresponding coupling element 12 of the upper link arm 11 can be locked detachably.

In addition, the adapter part 51 can also include connection counterpieces 52 for the operating-device and control connections of the work machine, which can be fitted to connection counterpieces 14 fitted in connection with the upper link arm 11. The connection counterpieces 52 are fitted rigidly to the coupling counterpiece 44, 53. Thus, as the connection counterpieces 52 are constantly in the same adapter part 51 as the coupling counterpiece 44, 53, its alignment will be certain with the corresponding connection counterpieces 14 fitted to the upper link arm 11. According to one embodiment, the coupling element 12 of the upper link arm 11 is arranged to be locked to the counterpiece 53 of the adapter part 51 by means of an axial movement, as described above as an example in one embodiment of the invention.

The adapter part 51 can be part of an installation kit, which also includes the coupling element 24 and/or straightening mechanism of the articulated shaft 21, which, according to one embodiment, can be equipped with means for combing it with the coupling of the upper link arm 11. The means can, for example, provide information on the success of the coupling of the upper link arm 11 to the coupling element 24, as a result of which coupling of the articulated shaft 21 can be performed. Of course, the locking element of the articulated shaft 21 can also be of a type fitted to the grooved pin 28 of the work machine 50.

According to one embodiment, the adapter series can additionally include a third connection part 28, which can be fitted to the power take-off shaft connection 28' of the work machine 50. This is particularly so if the locking of the power take-off shaft 21 takes place from the work-machine 50 side. In that case, the adapter part 51 of the upper link arm 11 and the coupling counterpiece 28 of the power take-off shaft 21 are arranged to operate jointly to perform locking. To achieve joint operation, the adapter part 51 and the coupling counterpiece 28 can be connected to each other using electronic data transfer, in which case information on the detaching of the power take-off shaft 21 from the coupling counterpiece 28 can trigger the detaching of the upper link arm 11 from the adapter part 51.

In the manner of the adapter part 51, the invention relates equally to an upper link arm 11, one end of which is equipped with a coupling element 12, which can be detachably coupled to a work machine 50 through an adapter part 51 arranged in the coupling counterpiece 51' of the particular work machine 50, which is arranged to couple rigidly to the coupling element 12 of the upper link arm 11. According to one embodiment, the coupling element 12 is arranged to lock to the coupling counterpiece 51', for example by means of an axial movement M1, which is disclosed above as one exemplary manner of implementation.

The coupling and uncoupling described above can be controlled manually or at least partly automatically. The control can take place, for example, by the action of the driver from the tractor's cab, or also from outside it. According to one embodiment, the connection of the connection counterpieces 14, 52 arranged for connecting the upper link arm 11 and/or the articulated shaft 21 and/or the operating-device and control connections to the work machine 50 and their disconnection from the work machine 50 can be automated at least partly. In the same way, it is possible to automate the alignment of the upper link arm 11 and the articulated shaft 21 to the counterpieces 51, 28. There can even be several alignment and control alternatives. Alignment and control can take place, for example, from the tractor's cab or also outside it. Some examples of the alignment and control alternatives are visible observations with a remote controller, camera/machine-vision control with a remote controller, a laser, or similar beam control with a remote controller.

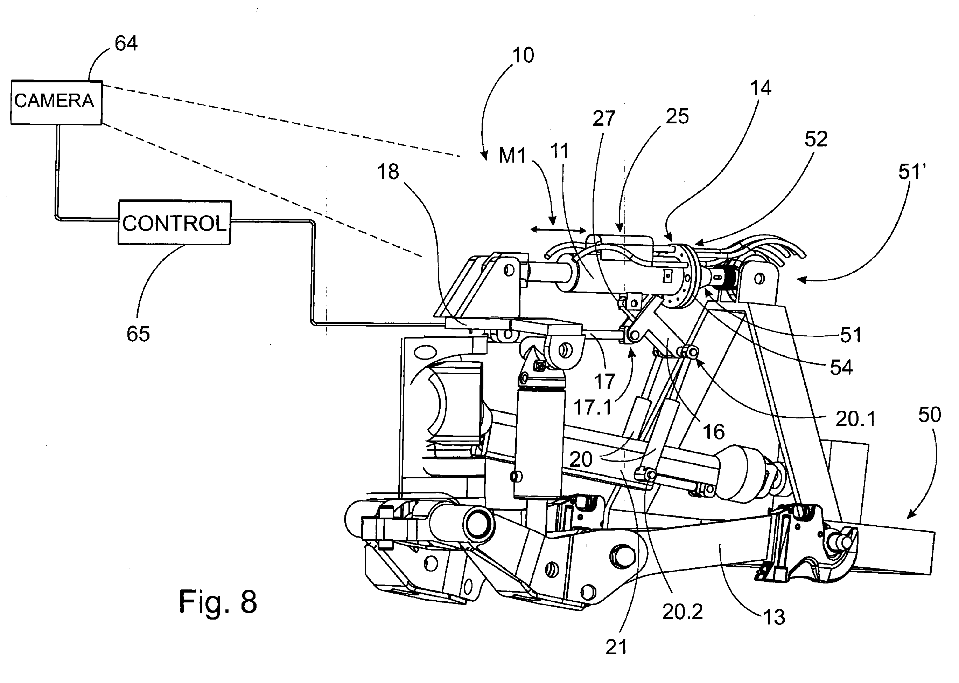

Figure 8 shows one embodiment of camera-assisted coupling. According to it, the tractor and/or arrangement can additionally include detector means, for example at least one camera 64 arranged to create image information of the position of the coupling element 12 of the upper link arm 11 and/or of the power take-off shaft 21 relative to the adapter part 51 fitted to the work machine 50 and/or relative to the counterpiece 28 of the power take-off shaft 21. For the upper link arm 11, at least one camera sensor can be arranged, for example at the rear of the tractor or on its front mask, depending on the application of the arrangement. The end of the articulated shaft 21 too can be equipped with, for example, a small camera sensor. On the basis of the information created by the camera 64, the tractor driver can, on the basis of his visual observations, use manual control to control the alignment means 16, 17, 19, 72, in order to achieve the coupling of the upper link arm 11 and/or the articulated shaft 21 to the work machine 50.

According to one embodiment, the tractor can also include a special control system 65 arranged to analyse the observation information created by the detector means 64 and on the basis of it to control the coupling event of at least the upper link arm 11. Automation of this kind can be based on, for example, machine vision or laser control.

Though the invention is described above as an application, in which the locking of the upper link arm 11 to the work machine 50 takes place by an axial movement M1, the basic idea of the invention can, in the case of the arrangement of the hydraulic and electrical connections for example, also be applied in a three-point hitch device 10, in which a traditional upper link arm with a loop-end for example, or an as such known quick-release clamp upper link arm can be used, as described above. The upper link arm will then be equipped with the alignment means 16 , 17, 19, 72 described above, which are arranged to operate independently, i.e. independently of the other operating devices. Once the upper link arm 11 and possibly also the articulated shaft 21 have been coupled to the work machine 50, the alignment means 16, 17, 19, 72 are arranged in a so-called floating state.

On the basis of the above it must be understood that the device 10 can also include other structural components than only those described above. Their implementation will, however, be obvious to one skilled in the art and they in no way affect the basic idea of the invention.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one skilled in the art.

## Claims

1. Three-point hitch device arrangement, which includes
- an upper link arm (11), in which there is a coupling element (12) for coupling the upper link arm (11) to a coupling counterpiece (51') fitted to a work machine (50),
- alignment means (16, 17, 19, 72) for aligning the coupling element (12) of the upper link arm (11) relative to the coupling counterpiece (51') fitted to the work machine (50), and
- lower link arms (13) together with operating devices (43),
and in which the alignment means (16, 17, 19, 72) are arranged to operate independently of the operating devices (43) of the lower link arms (13), **characterized in that** the alignment means include
- first operating-device means (17) connected to the upper link arm (11) for moving it vertically,
- second operating-device means (19, 72) connected to the upper link arm (11) for moving it horizontally.

2. Arrangement according to Claim 1, **characterized in that** at least the first operating-device means (17) are connected to the upper link arm (11) through an auxiliary pivot arm (16).

3. Arrangement according to Claims 1 or 2, **characterized in that** a special adapter part (51), which is arranged to couple rigidly to the coupling element (12) of the upper link arm (11), can be arranged in the coupling counterpiece (51') of the work machine (50).

4. Arrangement according to Claim 3, **characterized in that** the adapter part (51) is equipped with means (44, 55) for pre-aligning it towards the coupling element (12) of the upper link arm (11).

5. Arrangement according to any of Claims 1 - 4, **characterized in that** an operating device (26, 49), for the locking between the coupling element (12) and an adapter part (51), is fitted in connection with the coupling element (12).

6. Tractor, which includes a three-point hitch device, **characterized in that** the tractor is equipped with an arrangement according to any of Claims 1 - 5.

7. Upper link arm, one end of which is equipped with a quick release coupling element (12), which can be detachably attached to a work machine (50), **characterized in that** the upper link arm (11) can be coupled to the work machine (50), through a special adapter part (51), which can be arranged in the coupling counterpiece (51') of the work machine (50), and which is arranged to couple rigidly to the quick release coupling element (12) of the upper link arm (11).

## Patentansprüche

1. Dreipunktanbauvorrichtung, welche
- einen Oberlenker (11) mit einem Kupplungselement (12) zum Befestigen des Oberlenkers (11) an einem an einer Arbeitsmaschine (50) angeordneten Kupplungsgegenstück (51'),
- Ausrichtungsmittel (16, 17, 19, 72) zum Ausrichten das Kupplungselement (12) des Oberlenkers (11) relativ zu dem an der Arbeitsmaschine (50) angeordneten Kupplungsgegenstück (51'), und
- Unterlenker (13) einschließlich Betätigungsvorrichtungen (43)
umfasst, und bei welcher die Ausrichtungsmittel (16, 17, 19, 72) dazu eingerichtet sind, unabhängig von den Betätigungsvorrichtungen (43) der Unterlenker (13) zu arbeiten, **dadurch gekennzeichnet, dass** die Ausrichtungsmittel
- erste Betätigungsvorrichtungsmittel (17), die zwecks Bewegens des Oberlenkers (11) in vertikaler Richtung an diesen gekoppelt sind, und
- zweite Betätigungsvorrichtungsmittel (19, 72), die zwecks Bewegens des Oberlenkers (11) in der Horizontalebene an diesen gekoppelt sind,
umfassen.

2. Vorrichtung nach Anspruch 1, dadurch qekennzeichnet, dass wenigstens die ersten Betätigungsvorrichtungsmittel (17) über einen Hilfsgelenkarm (16) an den Oberlenker (11) gekoppelt sind.

3. Vorrichtung nach Anspruch 1 oder 2, **dadurch gekennzeichnet, dass** an dem Kupplungsgegenstück (51') der Arbeitsmaschine (50) ein besonderes Anpassungsteil (51) angeordnet werden kann, das dazu eingerichtet ist, sich starr an das Kupplungselement (12) des Oberlenkers (11) zu koppeln.

4. Vorrichtung nach Anspruch 3, **dadurch gekennzeichnet, dass** das Anpassungsteil (51) Mittel (44, 55) zum Vorausrichten desselben zum Kupplungselement (12) des Oberlenkers (11) hin aufweist.

5. Vorrichtung nach irgendeinem der Ansprüche 1 bis 4, **dadurch gekennzeichnet, dass** in Verbindung mit dem Kupplungselement (12) eine Betätigungsvorrichtung (26, 49) zum gegenseitigen Verriegeln des Kupplungselements (12) und des Anpassungsteils (51) angeordnet ist.

6. Schlepper mit Dreipunktanbauvorrichtung, **dadurch gekennzeichnet, dass** der Schlepper mit einer Vorrichtung nach einem der Patentansprüche 1 bis 5 ausgerüstet ist.

7. Oberlenker, der an seinem einen Ende mit einem Schnellverriegelungs-Kupplungselement (12) ausgerüstet ist, das sich lösbar an einer Arbeitsmaschine (50) befestigen lässt, **dadurch gekennzeichnet, dass** der Oberlenker (11) über ein besonderes Anpassungsteil (51), das an dem Kupplungsgegenstück (51') der Arbeitsmaschine (50) angeordnet sein kann und dazu eingerichtet ist, sich starr an das Schnellverriegelungs-Kupplungselement (12) des Oberlenkers (11) zu koppeln, an die Arbeitsmaschine (50) angekoppelt werden kann.

## Revendications

1. Arrangement pour un appareil à attelage trois points, qui comprend
- un bras de liaison supérieur (11), dans lequel il y a un élément de couplage (12) pour attacher le bras de liaison supérieur (11) à un pendant pour accouplement (51') attaché à un engin de travail mobile (50),
- des moyens d'alignement (16, 17, 19, 72) pour aligner l'élément de couplage (12) du bras de liaison supérieur (11) par rapport au pendant pour accouplement (51') attaché à l'engin de travail mobile (50),
- des bras de liaison inférieurs (13) avec leurs actionneurs (43),
et dans lequel les moyens d'alignement (16, 17, 19, 72) sont disposés de sorte à fonctionner indépendamment des actionneurs (43) des bras de liaison inférieurs (13), **caractérisé en ce que** les moyens d'alignement comprennent
- des premiers moyens de manoeuvre (17) accouplés au bras de liaison supérieur (11) pour le déplacer verticalement,
- des seconds moyens de manoeuvre (19, 72) accouplés au bras de liaison supérieur (11) pour le déplacer horizontalement.

2. Arrangement selon la revendication 1, **caractérisé en ce qu'**au moins les premiers moyens de manoeuvre (17) sont accouplés au bras de liaison supérieur (11) par un bras pivotant auxiliaire (16).

3. Arrangement selon la revendication 1 ou 2, **caractérisé en ce qu'**un adaptateur spécial (51), qui est disposé de sorte à être accouplé de manière rigide à l'élément de couplage (12) du bras de liaison supérieur (11), peut être disposé dans le pendant pour l'accouplement (51') de l'engin de travail mobile (50).

4. Arrangement selon la revendication 3, **caractérisé en ce que** l'adaptateur (51) est équipé de moyens (44, 55) pour le préaligner vers l'élément de couplage (12) du bras de liaison supérieur (11).

5. Arrangement selon l'une quelconque des revendications 1 à 4, **caractérisé en ce qu'**un actionneur (26, 49) pour le verrouillage entre l'élément de couplage (12) et l'adaptateur (51) est disposé en liaison avec l'élément de couplage (12).

6. Tracteur qui comprend un appareil à attelage trois points, **caractérisé en ce que** le tracteur est équipé d'un arrangement selon l'une quelconque des revendications 1 à 5.

7. Bras de liaison supérieur, dont une extrémité est équipée d'un élément de couplage rapide (12), qui peut être attaché de manière détachable à l'engin de travail mobile (50), **caractérisé en ce que** le bras de liaison supérieur (11) peut être accouplé à l'engin de travail mobile (50) par un adaptateur spécial (51) qui peut être disposé dans le pendant pour accouplement (51') de l'engin de travail mobile (50), et qui est disposé de sorte à être accouplé de manière rigide à l'élément de couplage rapide (12) du bras de liaison supérieur (11).
